# EUROPEAN PATENT APPLICATION

(11) **EP 4 439 694 A2**
(43) Date of publication of application: **02.10.2024**
(21) Application number: 24166501.7
(22) Date of filing: 26.03.2024
(51) Int. Cl.: H01M 4/04, H01G 11/28, H01G 11/86, H01M 4/133, H01M 4/139, H01M 4/1393, H01M 4/62, H01M 4/66

(54) **METHOD OF PREPARING DRY ELECTRODE, SYSTEM FOR PREPARING DRY ELECTRODE, AND LITHIUM BATTERY INCLUDING DRY ELECTRODE PREPARED THROUGH THE METHOD**

(30) Priority: 26.03.2023 KR 20230039380; 19.05.2023 KR 20230065229
(71) Applicant: Samsung SDI Co., Ltd., Yongin-si, Gyeonggi-do 17084 (KR)
(72) Inventor: KWON, Ilkyong, 17084 Yongin-si (KR); LEE, Jinhyon, 17084 Yongin-si (KR); KWON, Seunguk, 17084 Yongin-si (KR); KIM, Seongdae, 17084 Yongin-si (KR); NAM, Junghyun, 17084 Yongin-si (KR)
(74) Representative: Marks & Clerk LLP

(57) **Abstract**

Provided are a method of preparing a dry electrode, a system for preparing a dry electrode, and a lithium battery including a dry electrode prepared according to the method, wherein the method includes preparing a cut electrode current collector, applying a dry mixture onto the cut electrode current collector to prepare a first dry electrode plate, and rolling the first dry electrode plate to prepare a dry electrode, wherein the applying of the dry mixture is performed by using a cartridge including a drum having a surface on which a plurality of protrusions are provided.

## Description

### BACKGROUND

### 1. Field

One or more embodiments of the present disclosure relate to a method of preparing a dry electrode, a system for preparing a dry electrode, and a lithium battery including a dry electrode prepared according to the method.

### 2. Description of the Related Art

In order to achieve miniaturization and high performance of various devices, in addition to miniaturization and weight reduction of lithium batteries, high energy density is becoming more important. For example, high-capacity lithium batteries are becoming more important.

In electrodes prepared from a slurry including a solvent, an excessive amount of solvent is used in preparing the electrode, and thus dry methods that eliminate the use of such an organic solvent are under review.

### SUMMARY

One or more embodiments of the present disclosure include a method of preparing a dry electrode, in which a cut electrode current collector and a cartridge are used, thereby miniaturizing and integrating processes.

One or more embodiments include a system for preparing a dry electrode, in which a cut electrode current collector and a cartridge are used, thereby miniaturizing and integrating processes.

One or more embodiments include a lithium battery including a dry electrode manufactured according to the method of preparing the dry electrode.

Additional aspects of embodiments will be set forth in part in the description which follows and, in part, will be apparent from the description, or may be learned by practice of the presented embodiments of the present disclosure.

According to one or more embodiments, a method of preparing a dry electrode includes preparing a cut electrode current collector, applying a dry mixture onto the cut electrode current collector to prepare a first dry electrode plate, and rolling the first dry electrode plate to prepare a dry electrode, wherein the applying of the dry mixture is performed by using a cartridge including a drum having a surface on which protrusions are provided (e.g. formed).

According to one or more embodiments, a system for preparing a dry electrode includes a cutting portion for preparing a cut electrode current collector, an applicator for preparing a first dry electrode plate by applying a dry mixture onto the cut electrode current collector, and a rolling portion for preparing a dry electrode by rolling the first dry electrode plate, wherein the applicator includes a cartridge including a drum having a surface on which protrusions are provided (e.g. formed).

According to one or more embodiments, a dry electrode is prepared through the method of preparing the dry electrode.

According to one or more embodiments, a lithium battery includes a cathode, an anode, and an electrolyte between (e.g. disposed between) the cathode and the anode, wherein at least one selected from the cathode and the anode is the dry electrode.

At least some of the above and other features of the invention are set out in the claims.

### BRIEF DESCRIPTION OF THE DRAWINGS

The above and other aspects and features of certain embodiments of the present disclosure will be more apparent from the following description taken in conjunction with the accompanying drawings, in which:
FIG. 1 is a schematic view illustrating a process of cutting an electrode current collector according to embodiments;
FIG. 2 is a schematic side view illustrating a process of applying a dry mixture according to embodiments;
FIG. 3 is a schematic side view illustrating a rolling process according to embodiments;
FIG. 4 is a schematic perspective view illustrating a dry electrode according to embodiments;
FIG. 5 is a side view of an electrode assembly according to embodiments;
FIG. 6 is a side view of an electrode assembly according to embodiments;
FIG. 7 is a front view of an electrode assembly according to embodiments;
FIG. 8 is a schematic perspective view of a lithium battery according to embodiments;
FIG. 9 is a schematic perspective view of a lithium battery according to embodiments; and
FIG. 10 is a schematic perspective view of a lithium battery according to embodiments.

### DETAILED DESCRIPTION

Reference will now be made in more detail to embodiments, examples of which are illustrated in the accompanying drawings, wherein like reference numerals refer to like elements throughout. In this regard, the present embodiments may have different forms and should not be construed as being limited to the descriptions set forth herein. Accordingly, the embodiments are merely described below, by referring to the figures, to explain aspects of embodiments of the present description. As used herein, the term "and/or" includes any and all combinations of one or more of the associated listed items. Expressions such as "at least one of," if preceding a list of elements, modify the entire list of elements and do not modify the individual elements of the list.

Hereinafter, as the present disclosure allows for various changes and numerous embodiments, example embodiments will be illustrated in the drawings and described in more detail in the written description. However, this is not intended to limit the present disclosure to particular modes of practice, and it is to be appreciated that all changes, equivalents, and substitutes that do not depart from the technical scope of the present disclosure are encompassed in the present disclosure.

The terms used herein are merely used to describe example embodiments and are not intended to limit the present disclosure. An expression used in the singular encompasses the expression of the plural, unless it has a clearly different meaning in the context. As used herein, it is to be understood that the terms such as "including," "having," and "comprising" are intended to indicate the existence of the features, numbers, steps, actions, components, parts, ingredients, materials, or combinations thereof disclosed in the specification and are not intended to preclude the possibility that one or more other features, numbers, steps, actions, components, parts, ingredients, materials, or combinations thereof may exist or may be added. The symbol "/" used herein may be interpreted as "and" or "or" according to the context.

In the drawings, the thicknesses of layers and regions may be exaggerated or reduced for clarity. Like reference numerals in the drawings denote like elements throughout the specification. Throughout the specification, it will be understood that if a component, such as a layer, a film, a region, or a plate, is referred to as being "on" another component, the component may be directly on the other component or intervening components may be present thereon. Throughout the specification, while such terms as "first," "second," and the like may be used to describe various components, such components should not be limited to the above terms. The above terms are used only to distinguish one component from another.

As used herein, the term "dry" refers to a state of not being intentionally in contact with a solvent such as a process solvent and/or a state of not intentionally including a solvent. For example, a dry conductive material refers to a conductive material (e.g., an electrically conductive material) that is not intentionally in contact with a solvent and/or a conductive material (e.g., an electrically conductive material) that does not intentionally include a solvent. For example, a dry binder refers to a binder that is not intentionally in contact with a solvent and/or a binder that does not intentionally include a solvent. For example, a binder in a liquid state at room temperature without being mixed together with a solvent is a dry binder.

As used herein, a length of an electrode, a thickness of the electrode, the diameter of a through-hole, a depth of the through-hole, and an area of the through-hole refer to an average length, an average thickness, an average diameter, an average depth, and an average area, respectively. An average value is, for example, an arithmetic average value of values measured at a plurality of points. A length of an electrode, a thickness of the electrode, a diameter of a through-hole, a depth of the through-hole, and an area of the through-hole may each be measured by using a micrometer, a scanning electron microscope image, and/or an optical microscope image.

As used herein, the term "particle diameter" of particles refers to an average diameter if particles are spherical and refers to an average major axis length if particles are non-spherical. A particle diameter of particles may be measured by using a particle size analyzer (PSA). A "particle diameter" of particles is, for example, an average particle diameter. An average particle diameter refers to, for example, a median particle diameter (D50). The median particle diameter D50 is a particle size corresponding to a 50% cumulative volume if a particle size distribution measured through a laser diffraction method is calculated from particles having a smaller particle size. In some embodiments, the "average particle size" can be determined manually and/or by software from a scanning electron microscope (SEM) image and/or a transmission electron microscope (TEM) image.

The "aspect ratio" used herein may refer to the average aspect ratio and may be determined from SEM images.

The term "metal" as used herein includes all suitable metals and metalloids such as silicon and germanium in an elemental and/or ionic state.

The term "alloy" as used herein refers to a mixture of two or more metals.

The term "cathode active material" as used herein refers to a cathode material that may undergo lithiation and delithiation.

The term "anode active material" as used herein refers to an anode material that may undergo lithiation and delithiation.

The terms "lithiate" and "lithiating" as used herein refer to a process of adding lithium to a cathode active material or an anode active material.

The terms "delithiate" and "delithiating" as used herein refer to a process of removing lithium from a cathode active material or an anode active material.

The terms "charge" and "charging" as used herein refer to a process of providing electrochemical energy to a battery.

The terms "discharge" and "discharging" as used herein refer to a process of removing electrochemical energy from a battery.

The terms "positive electrode" and "cathode" as used herein refer to an electrode at which electrochemical reduction and lithiation occur during a discharging process.

The terms "negative electrode" and "anode" as used herein refer to an electrode at which electrochemical oxidation and delithiation occur during a discharging process.

Hereinafter, a method of preparing a dry electrode, a system for preparing a dry electrode, and a lithium battery including a dry electrode prepared according to the method according to embodiments will be described in more detail.

A method of preparing a dry electrode according to embodiments include preparing a cut electrode current collector, applying a dry mixture onto the cut electrode current collector to prepare a first dry electrode plate, and rolling the first dry electrode plate to prepare a dry electrode, wherein the applying of the dry mixture may be performed by using a cartridge including a drum having a surface on which protrusion are provided. A dry electrode film prepared from the dry mixture may not be cut during preparation of the dry electrode.

For example, if a dry electrode is prepared by using the cartridge including the drum having the surface on which the protrusions are provided, a miniaturized dry electrode may be more easily prepared. For example, as compared with a comparative example in which a dry electrode is prepared and then cut to prepare a cut dry electrode (i.e. where the electrode current collector and the dry electrode film are cut), if an electrode current collector is cut in advance, and then a dry active material is applied onto the electrode current collector to perform rolling and prepare a cut dry electrode, damage to a dry electrode film, which may otherwise occur during a process of cutting and miniaturizing the completed dry electrode, may be effectively prevented or reduced. In some embodiments, if the dry mixture is applied onto the cut electrode current collector by using the cartridge including the drum on which the protrusions are provided, the dry mixture satisfying a set or certain particle diameter range may be applied onto the cut electrode current collector, thereby improving the durability and current density of the prepared dry electrode. In some embodiments, by using the cut electrode current collector, the dry mixture may be applied and rolled by using miniaturized process equipment, and thus dry electrode processes may be miniaturized and integrated.

A method of preparing a dry electrode and a system for manufacturing a dry electrode according to embodiments will be described with reference to the drawings.

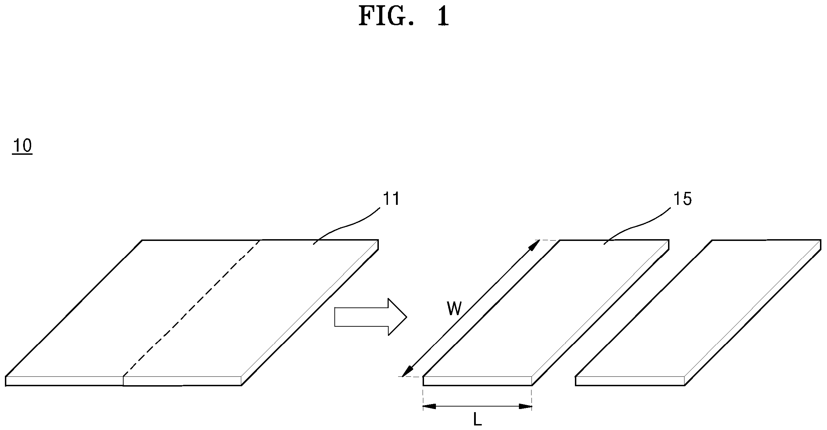

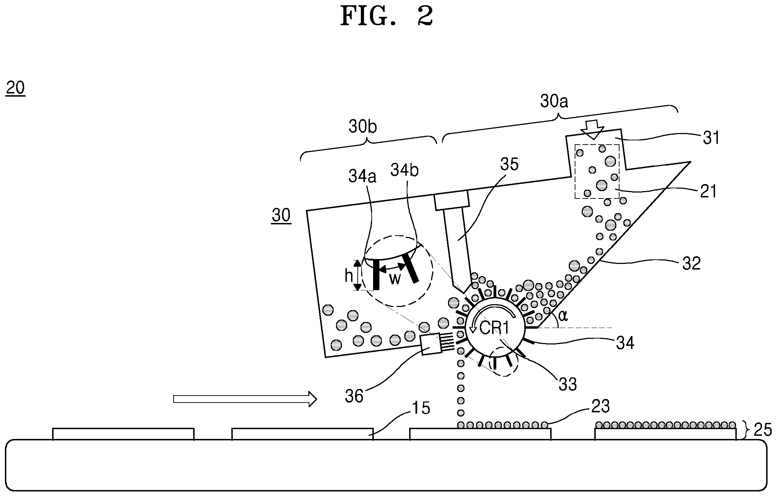

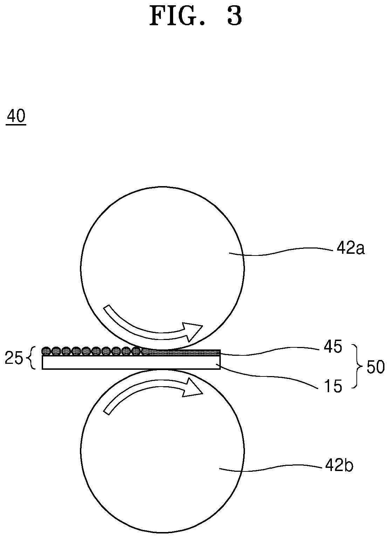

FIG. 1 is a schematic perspective view illustrating a process of cutting an electrode current collector according to embodiments. FIG. 2 is a schematic side view illustrating a process of applying a dry mixture according to embodiments. FIG. 3 is a schematic view illustrating a rolling process according to embodiments.

Referring to FIG. 1, a cut electrode current collector 15 may be prepared.

According to embodiments, an electrode current collector sheet 11 may be cut to prepare the cut electrode current collector 15. For example, a method of cutting the electrode current collector sheet 11 is not limited, and any suitable method of cutting the electrode current collector sheet 11 may be used without limitation. For example, the electrode current collector sheet 11 may be cut by using a metal cutting method.

According to embodiments, a width W of the cut electrode current collector 15 may be in a range of about 100 mm to about 500 mm, and a length L of the cut electrode current collector 15 may be in a range of about 200 mm to about 600 mm.

For example, the width W of the cut electrode current collector 15 may be in a range of about 100 mm to about 480 mm, about 100 mm to about 460 mm, about 100 mm to about 440 mm, about 100 mm to about 420 mm, about 100 mm to about 400 mm, about 100 mm to about 380 mm, about 100 mm to about 360 mm, about 110 mm to about 500 mm, about 120 mm to about 500 mm, or about 120 mm to about 360 mm.

For example, the length L of the cut electrode current collector 15 may be in a range of about 200 mm to about 580 mm, about 200 mm to about 560 mm, about 200 mm to about 540 mm, about 200 mm to about 520 mm, about 200 mm to about 500 mm, about 205 mm to about 600 mm, or about 205 mm to about 500 mm.

As a material constituting the cut electrode current collector 15, any suitable material, which does not react with lithium, for example, any suitable material, which does not form an alloy or compound together with lithium and has conductivity (e.g., electrical conductivity), may be used. A metal substrate of the cut electrode current collector 15 may include, for example, a metal and/or alloy. The metal substrate may include or consist of, for example, indium (In), copper (Cu), magnesium (Mg), stainless steel, titanium (Ti), iron (Fe), cobalt (Co), nickel (Ni), zinc (Zn), aluminium (Al), germanium (Ge), lithium (Li), and/or an alloy thereof. An electrode current collector may have a form of one selected from, for example, a sheet, foil, a film, a plate, a porous body, a mesoporous body, a through-hole-containing body, a polygonal ring body, a mesh body, a foam body, a woven body, and a nonwoven body, but one or more embodiments are not necessarily limited to the form. Any suitable form used in the art may be used. In some embodiments, like the electrode current collector, the cut electrode current collector 15 may also have a form of one selected from a sheet, foil, a film, a plate, a porous body, a mesoporous body, a through-hole-containing body, a polygonal ring body, a mesh body, a foam body, a woven body, and a nonwoven body. For example, the electrode current collector may include an internal substrate having a form in which a polymer having a form of fiber is woven into a fabric and a metal substrate layer covers a surface of the internal substrate.

For example, the cut electrode current collector 15 may have a reduced thickness as compared with an electrode current collector included in an electrode according to a related art. In some embodiments, an electrode according to the present disclosure may include, for example, a thin film current collector, and thus may be distinguished from an electrode of a related art including a thick film current collector. An electrode according to embodiments may adopt a thin film current collector having a reduced thickness, and thus a thickness of an electrode active material layer in the electrode including the thin film current collector may relatively increase. In some embodiments, the energy density of a lithium battery adopting such an electrode may increase. A thickness of the cut electrode current collector 15 including a metal substrate and an interlayer layer may be, for example, less than 15 µm, 14.5 µm or less, or 14 µm or less. The thickness of the cut electrode current collector 15 may be, for example, in a range of about 0.1 µm to less than 15 µm, about 1 µm to about 14.5 µm, about 2 µm to about 14 µm, about 3 µm to about 14 µm, about 5 µm to about 14 µm, or about 9 µm to about 14 µm.

As a material constituting the cut electrode current collector 15, any suitable material, which does not react with lithium, for example, any suitable material, which does not form an alloy or compound with lithium and has conductivity (e.g., electrical conductivity), may be used. The cut electrode current collector 15 may include, for example, a metal and/or an alloy. The cut electrode current collector 15 may include or consist of, for example, indium (In), copper (Cu), magnesium (Mg), stainless steel, titanium (Ti), iron (Fe), cobalt (Co), nickel (Ni), zinc (Zn), aluminium (Al), germanium (Ge), lithium (Li), and/or an alloy thereof.

The cut electrode current collector 15 may have a form of one selected from, for example, a sheet, foil, a film, a plate, a porous body, a mesoporous body, a through-hole-containing body, a polygonal ring body, a mesh body, a foam body, and a nonwoven body, but one or more embodiments are not necessarily limited to the form. Any suitable form used in the art may be used.

In some embodiments, the cut electrode current collector 15 may include, for example, a base film and a metal layer on one surface or two surfaces of the base film. The cut electrode current collector 15 may include a substrate, and the substrate may have a structure including, for example, a base film and a metal layer on one surface or two surfaces of the base film. The above-described interlayer may be additionally on the metal layer. The base film may include, for example, a polymer. The polymer may be, for example, a thermoplastic polymer. The polymer may include, for example, polyethylene terephthalate (PET), polyethylene (PE), polypropylene (PP), polybutylene terephthalate (PBT), polyimide (PI), or a combination thereof. The base film may include the thermoplastic polymer, and thus during a short circuit, the base film may be melted to suppress or reduce a rapid increase in current. The base film may be, for example, an insulator (e.g., an electrical insulator). The metal layer may include, for example, copper (Cu), stainless steel, titanium (Ti), iron (Fe), cobalt (Co), nickel (Ni), and/or an alloy thereof. The metal layer may serve as an electrochemical fuse and may be cut if an overcurrent occurs, thereby performing a short circuit prevention function. A thickness of the metal layer may be adjusted to adjust a limit current and a maximum current. The metal layer may be plated and/or deposited on the base film. If the thickness of the metal layer decreases, a limit current and/or a maximum current of the cut electrode current collector 15 may decrease, and thus the stability of a lithium battery during a short circuit may be improved. A lead tab may be added onto the metal layer for external connection. The lead tab may be welded to the metal layer or a metal layer/base film stack through ultrasonic welding, laser welding, spot welding, and/or the like. While the base film and/or the metal layer are melted during welding, the metal layer may be electrically connected to the lead tab. In order to more strongly weld the metal layer and the lead tab, a metal chip may be added between the metal layer and the lead tab. The metal chip may be a flake including or consisting of the same material as a metal of the metal layer. The metal chip may be, for example, metal foil and/or a metal mesh. The metal chip may be, for example, aluminium foil, copper foil, and/or SUS foil. The metal chip may be on the metal layer and then welded to the lead tab, and thus the lead tab may be welded to a metal chip/metal layer stack or a metal chip/metal layer/base film stack. During welding, while the base film, the metal layer, and/or the metal chip are melted, the metal layer or a metal layer/metal chip stack may be electrically connected to the lead tab. A metal chip and/or a lead tab may be added onto a portion of the metal layer. A thickness of the base film may be, for example, in a range of about 1 µm to about 50 µm, about 1.5 µm to about 50 µm, about 1.5 µm to about 40 µm, or about 1 µm to about 30 µm. The base film may have a thickness in such a range, and thus, a weight of an electrode assembly may be more effectively reduced. A melting point of the base film may be, for example, in a range of about 100 °C to about 300 °C, about 100 °C to about 250 °C, or about 100 °C to about 200 °C. The base film may have a melting point in such a range, and thus, the base film may be melted and easily coupled to the lead tab in a process of welding the lead tab. In order to improve adhesive strength between the base film and the metal layer, surface treatment such as corona treatment may be performed on the base film. A thickness of the metal layer may be, for example, in a range of about 0.01 µm to about 3 µm, about 0.1 µm to about 3 µm, about 0.1 µm to about 2 µm, or about 0.1 µm to about 1 µm. The metal layer may have a thickness in such a range, and thus, the stability of an electrode assembly may be secured while conductivity (e.g., electrical conductivity) is maintained. A thickness of the metal chip may be, for example, in a range of about 2 µm to about 10 µm, about 2 µm to about 7 µm, or about 4 µm to about 6 µm. The metal chip may have a thickness in such a range, and thus, the metal layer and the lead tab may be more easily connected. The cut electrode current collector 15 may have such a structure, and thus, a weight of an electrode may be reduced, thereby improving energy density. The cut electrode current collector 15 may be, for example, a cathode current collector. The cut electrode current collector 15 may be, for example, an anode current collector.

According to embodiments, an operation of preparing the cut electrode current collector 15 may include preparing the electrode current collector sheet 11, providing an interlayer on the electrode current collector sheet 11, and cutting the electrode current collector sheet 11 on which the interlayer layer is formed.

The interlayer may be directly on, for example, one surface or two surfaces of the electrode current collector sheet 11. In some embodiments, other layers may not be between the electrode current collector sheet 11 and the interlayer. The interlayer may be directly on one surface or two surfaces of the electrode current collector sheet 11, and thus a binding force between an electrode current collector and a dry electrode film 45 to be further described below may be further improved.

For example, the electrode current collector sheet 11 on which the interlayer is formed may be cut to prepare the cut electrode current collector 15. In some embodiments, the interlayer may be on the cut electrode current collector 15.

According to some embodiments, after the electrode current collector sheet 11 is cut, the interlayer may be directly formed on the cut electrode current collector 15.

A thickness of the interlayer may be, for example, 30% or less of the thickness of the cut electrode current collector 15. The thickness of the interlayer may be, for example, in a range of about 0.01% to about 30%, about 0.1% to about 30%, about 0.5% to about 30%, about 1% to about 25%, about 1% to about 20%, about 1% to about 15%, about 1% to about 10%, about 1% to about 5%, or about 1% to about 3% of the thickness of the cut electrode current collector 15. The thickness of the interlayer layer may be, for example, in a range of about 10 nm to about 5 µm, about 50 nm to about 5 µm, about 200 nm to about 4 µm, about 500 nm to about 3 µm, about 500 nm to about 2 µm, about 500 nm to about 1.5 µm, or about 700 nm to about 1.3 µm. The interlayer may have a thickness in such a range, and thus, a binding force between the cut electrode current collector 15 and an electrode active material layer may be further improved, and an increase in interfacial resistance may be suppressed or reduced.

In some embodiments, the interlayer may include a binder. The interlayer may include the binder, and thus a binding force between the cut electrode current collector 15 and the dry electrode film 45 to be further described below may be further improved. The binder included in the interlayer may be, for example, a conductive binder (e.g., an electrically conductive binder) and/or a non-conductive binder.

The conductive binder may include, for example, an ion-conductive binder and/or an electron-conductive binder. A binder having both ionic conductivity and electronic conductivity may belong to an ion-conductive binder and may also belong to an electron-conductive binder.

Examples of the ion-conductive binder may include poly(styrene sulfonate) (PSS), a polyvinylidene fluoride-hexafluoropropylene (PVDF-HFP) copolymer, polyvinyl fluoride (PVF), polyvinylidene fluoride (PVDF), poly(methylmethacrylate) (PMMA), polyethylene oxide (PEO), polyethylene glycol (PEG), polyacrylonitrile (PAN), polytetrafluoroethylene (PTFE), polyethylenedioxythiophene (PEDOT), polypyrrole (PPY), polyaniline, and polyacetylene. The ion-conductive binder may include a polar functional group. Examples of the ion-conductive binder including the polar functional group may include NAFION^{™}, AQUIVION^{®}, FLEMION^{®}, GORE^{™}, ACIPLEX^{™}, MORGANE^{®}-ADP, sulfonated poly(ether ether ketone) (SPEEK), sulfonated poly(arylene ether ketone ketone sulfone) (SPAEKKS), sulfonated poly(sulfonated poly(aryl ether ketone) (SPAEK), poly[bis(benzimidazobenzisoquinolinones)] (SPBIBI), PSS, lithium 9,10-diphenylanthracene-2-sulfonate (DPASLi⁺), and the like. Examples of the electron-conductive binder may include polyacetylene, polythiophene, PPY, poly(p-phenylene), poly(phenylenevinylene), poly(phenylenesulfide), polyaniline, and the like. The Interlayer may be, for example, a conductive layer (e.g., an electrically conductive layer) including a conductive polymer (e.g., an electrically conductive polymer).

The binder included in the interlayer may be selected from, for example, binders included in the dry electrode film 45 to be further described below. The interlayer may include the same binder as the dry electrode film 45 to be further described below. The binder included in the interlayer may be, for example, a fluorine-based binder. The fluorine-based binder included in the interlayer may include, for example, PVDF. The interlayer may be on an electrode current collector, for example, in a dry type (e.g., a dry form) or a wet type (e.g., a wet form). The interlayer layer may be, for example, a binding layer including a binder.

The interlayer may additionally include, for example, a carbon-based conductive material (e.g., a carbon-based electrically conductive material). The carbon-based conductive material included in the interlayer may be selected from carbon-based conductive materials included in an electrode active material layer. The interlayer may include the same carbon-based conductive material as the electrode active material layer. The interlayer may include the carbon-based conductive material and thus may be, for example, a conductive layer (e.g., an electrically conductive layer). The interlayer may be, for example, a conductive layer (e.g., an electrically conductive layer) including a binder and a carbon-based conductive material (e.g., a carbon-based electrically conductive material).

The interlayer may be provided on the electrode current collector sheet 11 and/or the cut electrode current collector 15 in a dry type (e.g., a dry form), for example, through deposition such as chemical vapor deposition (CVD) and/or physical vapor deposition (PVD). The interlayer may be provided on the electrode current collector sheet 11 and/or the cut electrode current collector 15 in a wet type (e.g., a wet form), for example, through spin coating and/or dip coating. The interlayer may be provided on the cut electrode current collector 15 by, for example, depositing a carbon-based conductive material (e.g., a carbon-based electrically conductive material) on the electrode current collector sheet 11 and/or the cut electrode current collector 15 through deposition. The interlayer applied through dry coating may include or consist of a carbon-based conductive material (e.g., a carbon-based electrically conductive material) and may not include a binder. In other embodiments, the interlayer may be provided on an electrode current collector by, for example, applying a composition including a carbon-based conductive material (e.g., a carbon-based electrically conductive material), a binder, and a solvent on a surface of the electrode current collector and drying the composition. The interlayer may have a single-layer structure or a multi-layer structure including a plurality of layers.

Referring to FIG. 2, a dry mixture 21 may be applied onto the cut electrode current collector 15 to prepare a first dry electrode plate 25. The applying of the dry mixture 21 may be performed by using a cartridge 30 which includes a drum 33 having a surface on which protrusions 34 are provided.

According to embodiments, the preparing of the first dry electrode plate 25 may include preparing the dry mixture 21, and applying the dry mixture 21 onto the cut electrode current collector 15 by using the cartridge 30.

According to embodiments, in the preparing of the dry mixture 21, the dry mixture 21 may be prepared by mixing together a dry electrode active material and a dry binder.

First, the dry electrode active material and the dry binder may be mixed together to prepare the dry mixture 21.

Dry mixing may mean that mixing is performed without using a process solvent. A process solvent may be, for example, a solvent used in preparing an electrode slurry. The process solvent may be, for example, water, N-methylpyrrolidone (NMP), and/or the like, but is not limited thereto. A material of the process solvent is not limited as long as the material is a process solvent used in preparing an electrode slurry. The dry mixing may be performed, for example, at a temperature of about 25 °C to about 65 °C by using a stirrer. The dry mixing may be performed at a rotational speed of about 10 rpm to about 10,000 rpm or about 100 rpm to about 1,000 rpm by using the stirrer. The dry mixing may be performed for about 1 minute to about 200 minutes or about 1 minute to about 150 minutes by using the stirrer.

The dry electrode active material may include a dry cathode active material or a dry anode active material. A prepared dry electrode 50 may be, for example, a dry cathode. In some embodiments, the dry electrode active material may include a dry cathode active material. The prepared dry electrode 50 may be, for example, a dry anode. In some embodiments, the dry electrode active material may include a dry anode active material.

As the dry cathode active material, any suitable material may be used without limitation as long as the material may be a lithium metal oxide and may be any suitable one generally used in the art.

For example, the dry cathode active material may include at least one composite oxide of lithium and a metal selected from cobalt, manganese, nickel, and a combination thereof. An example of the dry cathode active material may include a compound represented by any one selected from formulas of LiₐA_{1-b}B'D₂, wherein 0.90≤a≤1 and 0≤b≤0.5, LiₐE_{1-b}B'_{b}O_{2-c}D_{c}, wherein 0.90≤a≤1, 0≤b≤0.5, and 0≤c≤0.05, LiE_{2-b}B'_{b}O_{4-c}D_{c}, wherein 0≤b≤0.5 and 0≤c≤0.05, LiₐNi_{1-b-c}Co_{b}B'_{c}D_{α}, wherein 0.90≤a≤1, 0≤b≤0.5, 0≤c≤0.05, and 0<a≤2, LiₐNi_{1-b-c}Co_{b}B'_{c}O_{2-α}F'_{α}, wherein 0.90≤a≤1, 0≤b≤0.5, 0≤c≤0.05, and 0<α<2, LiₐNi_{1-b-c}Co_{b}B'_{c}O_{2-α}F'₂, wherein 0.90≤a≤1, 0≤b≤0.5, 0≤c≤0.05, and 0<α<2, LiₐNi_{1-b-c}Mn_{b}B'_{c}Dₐ, wherein 0.90≤a≤1, 0≤b≤0.5, 0≤c≤0.05, and 0<a≤2, LiₐNi_{1-b-c}Mn_{b}B'_{c}O_{2-α}F'_{α}, wherein 0.90≤a≤1, 0≤b≤0.5, 0≤c≤0.05, and 0<α<2, LiₐNi_{1-b-c}Mn_{b}B'_{c}O_{2-d}F'₂, wherein 0.90≤a≤1, 0≤b≤0.5, 0≤c≤0.05, and 0<α<2, LiₐNi_{b}E_{c}G_{d}O₂, wherein 0.90≤a≤1, 0≤b≤0.9, and 0≤c≤0.5, and 0.001 ≤d≤0.1, LiₐNi_{b}Co_{c}Mn_{d}GₑO₂, wherein 0.90≤a≤1, 0≤bv≤0.9, 0≤c≤0.5, 0≤d≤0.5, and 0.001≤e≤0.1, LiₐNiG_{b}O₂, wherein 0.90≤a≤1 and 0.001≤b≤0.1) LiₐCoG_{b}O₂, wherein 0.90≤a≤1 and 0.001≤b≤0.1, LiₐMnG_{b}O₂, wherein 0.90≤a≤1 and 0.001≤b:≤0.1, LiₐMn₂G_{b}O₄, wherein 0.90≤a≤1 and 0.001≤b≤0.1, QO₂, QS₂, LiQS₂, V₂O₅, LiV₂O₅, Lil'O₂, LiNiVO₄, Li_{(3-f)}J₂(PO₄)₃, wherein 0≤f≤2, Li_{(3-f)}Fe₂(PO₄)₃, wherein 0≤f≤2, and LiFePO₄.

In the formulas representing the above-described compounds, A may be Ni, Co, Mn, or a combination thereof, B' may be Al, Ni, Co, Mn, Cr, Fe, Mg, Sr, V, a rare earth element, or a combination thereof, D may be O, F, S, P, or a combination thereof, E may be Co, Mn, or a combination thereof, F' may be F, S, P, or a combination thereof, G may be Al, Cr, Mn, Fe, Mg, La, Ce, Sr, V, or a combination thereof, Q may be Ti, Mo, Mn, or a combination thereof, I' may be Cr, V, Fe, Sc, Y, or a combination thereof, and J may be V, Cr, Mn, Co, Ni, Cu, or a combination thereof.

A compound in which a coating layer is added to a surface of the above compound may also be used, and a mixture of the above compound and a compound in which a coating layer is added may also be used. The coating layer added to the surface of the above compound may include, for example, a coating element compound of an oxide or a hydroxide of a coating element, an oxyhydroxide of the coating element, an oxycarbonate of the coating element, and/or a hydroxycarbonate of the coating element. A compound constituting the coating layer may be amorphous and/or crystalline. The coating element included in the coating layer may include Mg, Al, Co, K, Na, Ca, Si, Ti, V, Sn, Ge, Ga, B, As, Zr, or a mixture thereof. A method of providing the coating layer may be selected within a range that does not adversely affect the physical properties of the cathode active material. A coating method may include, for example, spray coating, dipping, and/or the like. An example coating method may be well understood by those skilled in the art upon reviewing this disclosure, and thus, a further description thereof is not necessary here.

The dry cathode active material may be, for example, a composite cathode active material.

The composite cathode active material layer may include, for example, a core including a lithium transition metal oxide, and a shell provided along a surface of the core, wherein the shell includes at least one type (or kind) of a first metal oxide represented by a formula of MₐO_{b}, wherein 0<a≤3, 0<b<4, and if a is 1, 2, or 3, b is not an integer, and graphene, the first metal oxide is in a graphene matrix, M is at least one metal selected from Groups 2 to 13, Group 15, and Group 16 of the periodic table of elements, the lithium transition metal oxide includes nickel, and a nickel content is 80 mol% or more with respect to the total number of moles of a transition metal. The shell including the first metal oxide and graphene may be on the core of the composite cathode active material.

Graphene according to a related art may be difficult to uniformly apply on the core due to agglomeration. In other embodiments, in the composite cathode active material, a composite including a plurality of first metal oxides in the graphene matrix may be used so that aggregation of graphene may be prevented or reduced, and also so that a uniform (e.g., substantially uniform) shell may be on the core. In some embodiments, contact between the core and an electrolyte may be effectively blocked or reduced, thereby preventing or reducing side reactions due to the contact between the core and the electrolyte. For example, reduction of nickel ions (Ni³⁺->Ni²⁺) and cation mixing due to an electrolyte may be suppressed or reduced, thereby suppressing or reducing the formation of a resistive layer having a NiO phase and/or the like. In some embodiments, elution of nickel ions may also be suppressed or reduced. The shell including graphene may have flexibility and thus may easily accommodate a change in volume of the composite cathode active material during charging/discharging, thereby suppressing or reducing occurrence of cracks inside the composite cathode active material. Graphene may have high electronic conductivity (e.g., electrical conductivity), and thus interfacial resistance between the composite cathode active material and an electrolyte may be reduced. In some embodiments, despite the introduction of the shell including graphene, the internal resistance of a lithium battery may be maintained or reduced. In some embodiments, the first metal oxide may have withstand voltage, and thus the deterioration of the lithium transition metal oxide included in the core may be prevented or reduced during charging/discharging at a high voltage. For example, the cycle characteristics and high-temperature stability of a lithium battery including the composite cathode active material may be improved. The shell may include, for example, at least one type (or kind) of first metal oxide or two or more types (or kinds) of different first metal oxides. In some embodiments, while the composite cathode active material includes the lithium transition metal oxide at a high nickel content of 80 mol% or more with respect to the total number of moles of the transition metal, the shell including the first metal oxide and graphene may be on the core, thereby providing high discharge capacity and cycle characteristics at the same time or substantially the same time. For example, the composite cathode active material having a high nickel content of 80 mol% or more may provide improved capacity while still providing excellent lifespan characteristics as compared with a composite cathode active material having a relatively low nickel content. A metal included in the first metal oxide may include, for example, at least one selected from Al, Nb, Mg, Sc, Ti, Zr, V, W, Mn, Fe, Co, Pd, Cu, Ag, Zn, Sb, and Se.

The first metal oxide may include, for example, at least one selected from Al₂O_{z}, wherein 0<z<3, NbOₓ, wherein 0<x<2.5, MgOₓ, wherein 0<x<1, Sc₂O_{z}, wherein 0<z<3, TiO_{y}, wherein 0<y<2, ZrO_{y}, wherein 0<y<2, V₂O_{z}, wherein 0<z<3, WO_{y}, wherein 0<y<2, MnO_{y}, wherein 0<y<2, Fe₂O_{z}, wherein 0<z<3, Co₃O_{w}, wherein 0<w<4, PdOₓ, wherein 0<x<1, CuOₓ, wherein 0<x<1, AgOₓ, wherein 0<x<1, ZnOₓ, wherein 0<x<1, Sb₂O_{z}, wherein 0<z<3, and SeO_{y}, wherein 0<y<2. The first metal oxide may be in the graphene matrix, thereby improving the uniformity of the shell on the core and further improving the withstand voltage of the composite cathode active material. For example, the shell may include Al₂Oₓ, wherein 0<x<3. The shell may further include at least one type (or kind) of a second metal oxide represented by formula of MₐO_{c}, wherein 0<a≤3, 0<c≤4, and if a is 1, 2, or 3, c is an integer. M may be at least one metal selected from Groups 2 to 13, Group 15, and Group 16 of the periodic table of elements. For example, the second metal oxide may include the same metal as the first metal oxide, and c/a that is a ratio of c to a of the second metal oxide may have a greater value than b/a that is a ratio of b to a of the first metal oxide. For example, c/a > b/a. The second metal oxide may be selected from, for example, Al₂O₃, NbO, NbO₂, Nb₂O₅, MgO, Sc₂O₃, TiO₂, ZrO₂, V₂O₃, WO₂, MnO₂, Fe₂O₃, Co₃O₄, PdO, CuO, AgO, ZnO, Sb₂O₃, and SeO₂. The first metal oxide may be a reduction product of the second metal oxide. A portion or the entirety of the second metal oxide may be reduced to obtain the first metal oxide. In some embodiments, the first metal oxide has a lower oxygen content and a lower metal oxidation number than the second metal oxide. For example, the shell may include Al₂Oₓ that is the first metal oxide and Al₂O₃ that is the second metal oxide, wherein 0<x<3. In the composite cathode active material, for example, the graphene included in the shell may be chemically bound to a transition metal of the lithium transition metal oxide included in the core through a chemical bond. A carbon atom (C) of the graphene included in the shell may be chemically bound to a transition metal (Me) of the lithium transition metal oxide through a C-O-Me bond (for example, a C-O-Ni bond), for example, by using an oxygen atom. The graphene included in the shell may be chemically bound to the lithium transition metal oxide included in the core through a chemical bond, thereby allowing the core and the shell to become a composite. In some embodiments, the composite cathode active material may be distinguished from a simple physical mixture of graphene and a lithium transition metal oxide. For example, the first metal oxide included in the shell may also be chemically bound to the graphene through a chemical bond. In some embodiments, the chemical bond may be, for example, a covalent bond or an ionic bond. The covalent bond may be, for example, a bond including at least one selected from an ester group, an ether group, a carbonyl group, an amide group, a carbonate anhydride group, and an acid anhydride group. The ionic bond may be, for example, a bond including a carboxylic acid ion, an ammonium ion, an acyl cation group, or the like. A thickness of the shell may be, for example, in a range of about 1 nm to about 5 µm, about 1 nm to about 1 µm, about 1 nm to about 500 nm, about 1 nm to about 200 nm, about 1 nm to about 100 nm, about 1 nm to about 90 nm, about 1 nm to about 80 nm, about 1 nm to about 70 nm, about 1 nm to about 60 nm, about 1 nm to about 50 nm, about 1 nm to about 40 nm, about 1 nm to about 30 nm, about 1 nm to about 20 nm, or about 1 nm to about 10 nm. The shell may have a thickness in such a range, and thus, an increase in internal resistance of a lithium battery including the composite cathode active material may be suppressed or reduced.

A content of the composite included in the composite cathode active material may be 3 wt% or less, 2 wt% or less, 1 wt% or less, 0.5 wt% or less, or 0.2 wt% or less of the total weight of the composite cathode active material. The content of the composite may be in a range of about 0.01 wt% to about 3 wt%, about 0.01 wt% to about 1 wt%, about 0.01 wt% to about 0.7 wt%, about 0.01 wt% to about 0.6 wt%, about 0.1 wt% to about 0.5 wt%, about 0.01 wt% to about 0.2 wt%, about 0.01 wt% to about 0.1 wt%, or about 0.03 wt% to about 0.07 wt% of the total weight of the composite cathode active material. The composite cathode active material may include the composite in such a range, and thus, the cycle characteristics of a lithium battery including the composite cathode active material may be further improved. An average particle diameter (e.g. D50) of at least one selected from the first metal oxide and the second metal oxide included in the composite may be in a range of about 1 nm to about 1 µm, about 1 nm to about 500 nm, about 1 nm to about 200 nm, about 1 nm to about 100 nm, about 1 nm to about 70 nm, about 1 nm to about 50 nm, about 1 nm to about 30 nm, about 3 nm to about 30 nm, about 3 nm to about 25 nm, about 5 nm to about 25 nm, about 5 nm to about 20 nm, or about 7 nm to about 20 nm. The first metal oxide and/or the second metal oxide may each have a particle diameter in such a nanorange, and thus, may be more uniformly distributed in a graphene matrix of the composite. In some embodiments, such a composite may be uniformly (e.g., substantially uniformly) applied onto the core without agglomeration to form the shell. For example, the first metal oxide and/or the second metal oxide may have a particle diameter in such a range, and thus, may be more uniformly on the core. In some embodiments, the first metal oxide and/or the second metal oxide may be uniformly (e.g., substantially uniformly) on the core, thereby more effectively exhibiting withstand voltage characteristics. The average particle diameter of each of the first metal oxide and the second metal oxide may be measured, for example, through a measurement device using a laser diffraction method and/or a dynamic light scattering method. For example, an average particle diameter may be measured by using a laser scattering particle size distribution meter (for example, LA-920 manufactured by Horiba Corporation) and may be a value of a median particle diameter D50 if metal oxide particles are accumulated to 50% from smaller particles in volume conversion.

The core included in the composite cathode active material may include, for example, a lithium transition metal oxide represented by a formula selected from Formulas 1 to 8 below:

Formula 1 LiₐCoₓM_{y}O_{2-b}A_{b}

in Formula 1,
1.0≤a≤1.2, 0≤b≤0.2, 0.9≤x≤1, 0≤y≤0.1, x+y=1,
M may be manganese (Mn), niobium (Nb), vanadium (V), magnesium (Mg), gallium (Ga), silicon (Si), tungsten (W), molybdenum (Mo), iron (Fe), chromium (Cr), copper (Cu), zinc (Zn), titanium (Ti), aluminium (Al), boron (B), or a combination thereof, and
A may be F, S, Cl, Br, or a combination thereof,

Formula 2 LiₐNiₓCo_{y}M_{z}O_{2-b}A_{b}

in Formula 2,
1.0≤a≤1.2, 0≤b≤0.2, 0.8≤x<1, 0≤5y≤0.3, 0<z≤0.3, x+y+z=1,
M may be manganese (Mn), niobium (Nb), vanadium (V), magnesium (Mg), gallium (Ga), silicon (Si), tungsten (W), molybdenum (Mo), iron (Fe), chromium (Cr), copper (Cu), zinc (Zn), titanium (Ti), aluminium (Al), boron (B), or a combination thereof, and
A may be F, S, Cl, Br, or a combination thereof,

Formula 3 LiNiₓCo_{y}Mn_{z}O₂

Formula 4 LiNiₓCo_{y}Al_{z}O₂

in Formula 3 and Formula 4, 0.8≤x≤0.95, 0≤y≤0.2, 0<z≤0.2, and x+y+z=1.

Formula 5 LiNiₓCo_{y}Mn_{z}Al_{w}O₂

in Formula 5, 0.8≤x≤0.95, 0≤5y≤0.2, 0<z≤0.2, 0<w≤0.2, and x+y+z+w=1, Formula 6

LiₐNiₓMn_{y}M'_{z}O_{2-b}A_{b}

in Formula 6,
1.0≤a≤1.2, 0≤b≤0.2, 0<x≤0.3, 0.5≤y<1, 0<z≤0.3, x+y+z=1,
M' may be cobalt (Co), niobium (Nb), vanadium (V), magnesium (Mg), gallium (Ga), silicon (Si), tungsten (W), molybdenum (Mo), iron (Fe), chromium (Cr), copper (Cu), zinc (Zn), titanium (Ti), aluminium (Al), boron (B), or a combination thereof, and
A may be F, S, Cl, Br, or a combination thereof,

Formula 7 LiₐM1ₓM2_{y}PO_{4-b}X_{b}

in Formula 7, 0.90≤a≤1.1, 0:≤x:≤0.9, 0≤y≤0.5, 0.9<x+y<1.1, 0≤b≤2,
M1 may be chromium (Cr), manganese (Mn), iron (Fe), cobalt (Co), nickel (Ni), copper (Cu), zirconium (Zr), or a combination thereof,
M2 may be magnesium (Mg), calcium (Ca), strontium (Sr), barium (Ba), titanium (Ti), zinc (Zn), boron (B), niobium (Nb), gallium (Ga), indium (In), molybdenum (Mo), tungsten (W), aluminium (Al), silicon (Si), chromium (Cr), vanadium (V), scandium (Sc), yttrium (Y), or a combination thereof, and X may be O, F, S, P, or a combination thereof, and

Formula 8 LiₐM3_{z}PO₄

in Formula 8, 0.90≤a≤1.1, 0.9≤z≤1.1, and
M3 may be chromium (Cr), manganese (Mn), iron (Fe), cobalt (Co), nickel (Ni), copper (Cu), zirconium (Zr), or a combination thereof.

A content of the dry cathode active material may be, for example, in a range of about 80 wt% to about 98 wt%, or about 90 wt% to about 98 wt% with respect to the dry mixture 21.

As the dry anode active material, any suitable material may be used as long as the material may be used as an anode active material of a lithium battery in the art. For example, the anode active material may include at least one selected from a lithium metal, a metal alloyable with lithium, a transition metal oxide, a non-transition metal oxide, and a carbon-based material. Examples of the metal alloyable with lithium may include Si, Sn, Al, Ge, Pb, Bi, Sb, a Si-Y alloy, wherein Y is an alkali metal, an alkali earth metal, a Group 13 element, a Group 14 element, a transition metal, a rare earth element, or a combination thereof and is not Si, a Sn-Y alloy, wherein Y is an alkali metal, an alkali earth metal, a Group 13 element, a Group 14 element, a transition metal, a rare earth element, or a combination thereof and is not Sn, and the like. The element Y may include, for example, Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Ti, Ge, P, As, Sb, Bi, S, Se, Te, Po, or a combination thereof (e.g. Mg, Ca, Sr, Ba, Sc, Y, Ti, Zr, Hf, V, Nb, Ta, Cr, Mo, W, Re, Fe, Pb, Ru, Os, Rh, Ir, Pd, Pt, Cu, Ag, Au, Zn, Cd, B, Al, Ga, Sn, In, Ti, Ge, P, As, Sb, Bi, S, Se, Te, or a combination thereof). The transition metal oxide may be, for example, lithium titanium oxide, vanadium oxide, lithium vanadium oxide, and/or the like. The non-transition metal oxide may be, for example, SnO₂, SiOₓ, wherein 0<x≤2, and/or the like. The carbon-based material may be, for example, crystalline carbon, amorphous carbon, or a mixture thereof. The crystalline carbon may be, for example, graphite such as non-shaped, plate-shaped, flake-shaped, spherical, and/or fibrous natural graphite and/or artificial graphite. The amorphous carbon may be, for example, soft carbon (low-temperature fired carbon) and/or hard carbon, mesophase pitch carbide, fired coke, and/or the like.

A content of the dry anode active material included in the dry mixture 21 may be, for example, in a range of about 80 wt% to about 98 wt%, or about 90 wt% to about 98 wt% with respect to the total weight of the dry mixture 21.

The dry binder may include, for example, PTFE, a PVDF-HFP copolymer, PVDF, polyvinyl alcohol (PVA), PAN, carboxymethyl cellulose (CMC), starch, hydroxy propyl cellulose, cellulose, polyvinylpyrrolidone (PVP), PE, PP, ethylene-propylene-diene monomer (EPDM) rubber, sulfonated-EPDM rubber, styrene butadiene rubber (SBR), fluorine-containing rubber, or a combination thereof, but one or more embodiments are not limited thereto. Any suitable binder may be used as long as the binder may be used in preparing a dry electrode. The dry binder may include, for example, a fluorine-based binder. The fluorine-based binder may include, for example, PTFE, a PVDF-HFP copolymer, PVDF, or a combination thereof.

A glass transition temperature T_{g} of the dry binder may be, for example, in a range of about -30 °C to about 150 °C, about 15 °C to about 150 °C, about 15 °C to about 130 °C, about 50 °C to about 130 °C, about 100 °C to about 130 °C, or about 120 °C to about 130 °C. A glass transition temperature of PTFE may be, for example, in a range of about 120 °C to about 130 °C. The dry binder may have a glass transition temperature in such a range, and thus, a fibrillized binder or fibrous binder may be more easily obtained in a process of preparing a dry electrode. The glass transition temperature T_{g} of the dry binder may mean the glass transition temperature measured with respect to the dry binder using a DSC Discovery (TA Instrument Inc.). The dry binder is heated to 180 °C at a rate of 20 °C/min, slowly cooled to -100 °C at the same rate, and heated to 100 °C at a rate of 10 °C/min in order to obtain an endothermic transition curve. Then, an inflection point of the endothermic transition curve may be determined as the glass transition temperature.

A content of the dry binder may be, for example, in a range of about 0.1 wt% to about 5 wt%, about 0.5 wt% to about 4 wt%, or about 1 wt% to about 3 wt% with respect to the total weight of the dry mixture 21. The dry mixture 21 may include the dry binder in such a range so that a binding force of the dry electrode film 45 to be further described below may be improved, and the dry electrode film 45 may maintain high energy density.

According to embodiments, the dry mixture 21 may further include a dry conductive material (e.g., a dry electrically conductive material). The dry mixture 21 may further include the dry conductive material, and thus, the internal resistance of the dry electrode film 45 to be described below may be reduced.

A fibrous carbon-based material having an aspect ratio of 10 or more may include, for example, a carbon fiber, carbon nanotubes, carbon nanobelts, and/or the like, but one or more embodiments are not limited thereto. Any suitable material may be used as long as the material may be used as a carbon-based conductive material (e.g., a carbon-based electrically conductive material) in the art.

A particulate carbon-based material having an aspect ratio of 5 or less (e.g. less than 5) may include, for example, Denka black, carbon black, acetylene black, Ketjen black, natural graphite, artificial graphite, and/or the like, but one or more embodiments are not limited thereto. Any suitable material may be used as long as the material may be used as a carbon-based conductive material in the art (e.g., a carbon-based electrically conductive material). The aspect ratio of the particulate carbon-based material may be, for example, in a range of about 1 to about 5, about 1 to about 4, about 1 to about 3, or about 1 to about 2.

Examples of the dry conductive material may include Denka black, carbon black, graphite particles, natural graphite, artificial graphite, acetylene black, Ketjen black, and a carbon fiber; carbon nanotubes; a metal powder, a metal fiber, and/or a metal tube of copper, nickel, aluminium, and/or silver; and a conductive polymer (e.g., an electrically conductive polymer) such as a polyphenylene derivative, but one or more embodiments are not limited thereto. Any suitable material may be used as long as the material may be used a conductive material (e.g., an electrically conductive material) in the art. A conductive material (e.g., an electrically conductive material) may be, for example, a carbon-based conductive material (e.g., a carbon-based electrically conductive material).

A content of the dry conductive material included in the dry mixture 21 may be, for example, in a range of about 0.1 wt% to about 5 wt%, about 0.5 wt% to about 4 wt%, or about 1 wt% to about 3 wt% with respect to the total weight of the dry mixture 21. The dry mixture 21 may include the dry conductive material in such a range so that the conductivity (e.g., the electrical conductivity) of the dry electrode film 45 prepared therefrom may be improved, and the cycle characteristics of a lithium battery including the dry electrode film 45 may be improved.

According to embodiments, the dry mixing may be performed, for example, one or more times. First, a dry electrode active material, a dry conductive material (e.g., a dry electrically conductive material), and a dry binder may be primarily dry-mixed to prepare an intermediate dry mixture. The primary dry mixing may be performed, for example, at a rotational speed of 2,000 rpm or less at a temperature of about 25 °C to about 65 °C for 15 minutes or less. The primary dry mixing may be performed, for example, at a rotational speed of about 500 rpm to about 2,000 rpm at a temperature of about 25 °C to about 65 °C for about 5 minutes to about 15 minutes. Through the primary dry mixing, the dry electrode active material, the dry conductive material, and the dry binder may be uniformly (e.g., substantially uniformly) mixed. Next, the dry electrode active material, the dry conductive material, and the dry binder may be secondarily dry-mixed to prepare the dry mixture 21.

The secondary dry mixing may be performed, for example, at a rotational speed of 4,000 rpm or less at a temperature of about 25 °C to about 65 °C for 10 minutes or more. The secondary dry mixing may be performed, for example, at a rotational speed of about 4,000 rpm to about 9,000 rpm at a temperature of about 25 °C to about 65 °C for about 10 minutes to about 60 minutes. The dry mixture 21 including a fibrillated dry binder may be obtained through the secondary dry mixing.

The stirrer may be, for example, a kneader. The stirrer may include, for example, a chamber, at least one rotating shaft inside the chamber to rotate, and a blade rotatably coupled to the rotating shaft and provided in a length direction of the rotating shaft. The blade may be, for example, at least one selected from a ribbon blade, a sigma blade, a Z blade, a dispersion blade, and a screw blade. By including the blade, without a solvent, the dry electrode active material, the dry conductive material, and the dry binder may be effectively mixed together to prepare a dough-like mixture.

A plasticizer and/or a pore former may be further added to the dry mixture 21 to additionally form pores in the dry electrode film 45 to be further described below.

Referring to FIG. 2, the dry mixture 21 may be applied onto the cut electrode current collector 15 by using the cartridge 30. For example, the cartridge 30 may include the drum 33 having the surface on which the protrusions 34 are provided. For example, after the dry mixture 21 is injected into the cartridge 30, only the dry mixture 21 that satisfies a set or specific particle diameter range may be sorted through the drum 33 included in the cartridge 30 so that only the dry mixture 21 that satisfies the set or specific particle diameter range may be applied onto the cut electrode current collector 15. For example, the protrusions 34 on the surface of the drum 33 may collect only the dry mixture 21 satisfying the set or specific particle diameter range, and thus, the dry mixture 21 satisfying the set or specific particle diameter range may be applied onto the cut electrode current collector 15.

According to some embodiments, a height h of the protrusion 34 on the surface of the drum 33 may be in a range of about 0.1 mm to about 20 mm, and a width w between adjacent protrusions 34 may be in a range of about 0.01 mm to about 0.1 mm. The width w between the adjacent protrusions 34 may refer to a distance between one protrusion randomly selected from a plurality of protrusions 34 and the protrusion 34 adjacent thereto.

For example, the height h of each of the protrusions 34 on the surface of the drum 33 may be in a range of about 0.1 mm to about 20 mm, about 0.1 mm to about 18 mm, about 0.1 mm to about 16 mm, about 0.1 mm to about 14 mm, about 0.1 mm to about 12 mm, about 0.1 mm to about 10 mm, about 0.1 mm to about 8 mm, about 0.1 mm to about 6 mm, about 0.1 mm to about 4 mm, about 0.1 mm to about 2 mm, about 0.1 mm to about 1 mm, about 0.2 mm to about 20 mm, about 0.2 mm to about 18 mm, about 0.2 mm to about 16 mm, about 0.2 mm to about 14 mm, about 0.2 mm to about 12 mm, about 0.2 mm to about 10 mm, about 0.2 mm to about 8 mm, about 0.2 mm to about 6 mm, about 0.2 mm to about 4 mm, about 0.2 mm to about 2 mm, about 0.2 mm to about 1 mm, about 0.3 mm to about 20 mm, about 0.3 mm to about 18 mm, about 0.3 mm to about 16 mm, about 0.3 mm to about 14 mm, about 0.3 mm to about 12 mm, about 0.3 mm to about 10 mm, about 0.3 mm to about 8 mm, about 0.3 mm to about 6 mm, about 0.3 mm to about 4 mm, about 0.3 mm to about 2 mm, about 0.4 mm to about 1 mm, about 0.4 mm to about 20 mm, about 0.4 mm to about 18 mm, about 0.4 mm to about 16 mm, about 0.4 mm to about 14 mm, about 0.4 mm to about 12 mm, about 0.4 mm to about 10 mm, about 0.4 mm to about 8 mm, about 0.4 mm to about 6 mm, about 0.4 mm to about 4 mm, about 0.4 mm to about 2 mm, about 0.4 mm to about 1 mm, about 0.5 mm to about 20 mm, about 0.5 mm to about 18 mm, about 0.5 mm to about 16 mm, about 0.5 mm to about 14 mm, about 0.5 mm to about 12 mm, about 0.5 mm to about 10 mm, about 0.5 mm to about 8 mm, about 0.5 mm to about 6 mm, about 0.5 mm to about 4 mm, about 0.5 mm to about 2 mm, or about 0.5 mm to about 1 mm.

For example, the width w between the adjacent protrusions 34 may be in a range of about 0.01 mm to about 0.8 mm, about 0.01 mm to about 0.7 mm, about 0.01 mm to about 0.6 mm, about 0.01 mm to about 0.5 mm, about 0.01 mm to about 0.4 mm, about 0.01 mm to about 0.3 mm, about 0.01 mm to about 0.2 mm, about 0.01 mm to about 0.1 mm, about 0.01 mm to about 0.05 mm, about 0.02 mm to about 0.8 mm, about 0.02 mm to about 0.7 mm, about 0.02 mm to about 0.6 mm, about 0.02 mm to about 0.5 mm, about 0.02 mm to about 0.4 mm, about 0.02 mm to about 0.3 mm, about 0.02 mm to about 0.2 mm, about 0.02 mm to about 0.1 mm, or about 0.02 mm to about 0.05 mm.

For example, the height h of each of the protrusions 34 may refer to a length from the surface of the drum 33 to the highest point to which each of the protrusions 34 protrudes.

For example, the width w between the adjacent protrusions 34 may refer to a distance between any one protrusion 34a of a plurality of protrusions 34a and 34b and a protrusion 34b adjacent to the protrusion 34a. The adjacent protrusion may be a protrusion that is closest to the selected one protrusion. Referring to FIG. 2, the distance between any one protrusion 34a and the protrusion 34b adjacent to the protrusion 34a may be measured as a distance from one side surface of any one protrusion 34a to a surface of the protrusion 34b adjacent to the one side surface on the surface of the drum 33.

According to embodiments, a rotational speed CR1 of the drum 33 may be in a range of about 5 rpm to about 120 rpm.

According to embodiments, a dry mixture having an average particle diameter (e.g. D50) of about 0.05 mm to about 1.0 mm may be applied onto the cut electrode current collector 15 by using the cartridge 30. For example, the average particle diameter (e.g. D50) of the dry mixture may be in a range of about 0.05 mm to about 0.8 mm, about 0.05 mm to about 0.7 mm, about 0.05 mm to about 0.6 mm, about 0.05 mm to about 0.5 mm, about 0.06 mm to about 1.0 mm, about 0.07 mm to about 1.0 mm, about 0.08 mm to about 1.0 mm, or about 0.08 mm to about 0.5 mm.

Referring to FIG. 2, the cartridge 30 may include a hopper region 30a. For example, the dry mixture 21 may be injected into the hopper region 30a. The injected dry mixture 21 may move to the drum 33, which has the surface on which the protrusions 34 are provided, in the hopper region 30a. The dry mixture 21 satisfying the set or specific particle diameter range among the dry mixtures 21 may be applied onto a surface of the cut electrode current collector 15 by using the drum 33. In some embodiments, an application layer 23 may be formed on at least a portion of the surface of the cut electrode current collector 15.

According to other embodiments, the cartridge 30 may further include a residue region 30b. For example, among the dry mixtures 21 injected into the hopper region 30a, a dry mixture that does not satisfy the set or specific particle diameter range may be sorted and moved to the residue region 30b. For example, the dry mixture sorted to be moved to the residue region 30b may be recycled to other dry electrode preparing processes.

According to embodiments, the cartridge 30 may include an injection portion 31, a sliding portion 32, the drum 33 on which the protrusions 34 are formed, a doctor blade 35, and a brush portion 36.

For example, the dry mixture 21 may be injected into the hopper region 30a through the injection portion 31. For example, the dry mixture 21 injected into the hopper region 30a through the sliding portion 32 may move to the drum 33 on which the protrusions 34 are provided. For example, the sliding portion 32 may form a set or certain angle α together with a ground surface. For example, an angle between the sliding portion 32 and the ground surface may be more than 0° and less than 90°. For example, an amount of the dry mixture 21 moving to the drum 33 through the sliding portion 32 may be adjusted, and thus, an amount of the dry mixture 21 applied onto the cut electrode current collector 15 may be adjusted.

For example, the drum 33 on which the protrusions 34 are provided may apply only the dry mixture 21, which satisfies the set or specific particle diameter range, onto the cut electrode current collector 15.

For example, the doctor blade 35 may prevent or reduce the movement of an excessive amount of the dry mixture 21 in a process of sorting the dry mixture 21 that satisfies the set or specific particle diameter range among the dry mixtures 21 that have reached the drum 33 on which the protrusions 34 are provided. The dry mixture 21 caught by the doctor blade 35 may remain in the hopper region 30a, and the dry mixture 21 satisfying the set or specific particle diameter range may be sorted again through the drum 33. In some embodiments, efficiency of sorting the dry mixture 21 that satisfies the set or specific particle diameter range may be further improved.

For example, the brush portion 36 may separate the dry mixture 21 remaining in the drum 33 from the drum 33 to more easily apply the separated dry mixture 21 onto the cut electrode current collector 15.

According to embodiments, the dry mixture 21 satisfying the set or specific particle diameter may be applied onto the cut electrode current collector 15 through the cartridge 30. In some embodiments, the first dry electrode plate 25, which includes the application layer 23 including the dry mixture 21 that satisfies the set or specific particle diameter range, may be prepared.

According to embodiments, the first dry electrode plate 25 may be rolled to prepare the dry electrode 50. For example, the preparing of the dry electrode 50 may include inserting the first dry electrode plate 25 between calender rolls 42a and 42b, and rolling the first dry electrode plate 25 by using the calender rolls 42a and 42b to prepare the dry electrode 50.

Referring to FIG. 3, the first dry electrode plate 25 may pass between a pair of calender rolls 42a and 42b to be processed into the dry electrode 50. For example, the application layer 23 included in the first dry electrode plate 25 may be processed into the dry electrode film 45. In some embodiments, the dry electrode 50 including the cut electrode current collector 15 and the dry electrode film 45 may be prepared.

For example, a direction in which the dry electrode 50 is formed and moved may be a machine direction (MD) of the dry electrode film 45. While the first dry electrode plate 25 passes through the pair of calender rolls 42a and 42b, the first dry electrode plate 25 may be rolled by the pair of calender rolls 42a and 42b. In some embodiments, the dry electrode film 45 fibrillized in the MD may be formed on the cut electrode current collector 15. The dry electrode film 45 may include a dry binder that is fibrillized or fiberized in the MD.

For example, the dry electrode film 45 may include the dry binder. The dry binder may be, for example, a binder that is not impregnated, dissolved, or dispersed in a process solvent in a process of preparing the dry electrode film 45. The dry binder may be, for example, a binder that does not include a process solvent and/or is not in contact with a process solvent in a process of preparing the dry electrode film 45. The dry binder may be a fibrillized binder and/or a fibrous binder. The fibrillized binder and/or fibrous binder may serve as a matrix for supporting and binding a dry electrode active material and other components included in a dry electrode active material layer. The fibrous binder and/or fibrous binder may have a fibrous form. The fibrillized binder and/or fibrous binder may have an aspect ratio of, for example, 10 or more, 20 or more, 50 or more, or 100 or more.

The dry electrode film 45 may be free (e.g., completely free) of a residual process solvent. The dry electrode film 45 may include a dry electrode active material, the dry binder, and a dry conductive material (e.g., a dry electrically conductive material), and a process solvent may not be used in a process of preparing the dry electrode film 45 so that the dry electrode film 45 may be free (e.g., completely free) of an intentionally used residual process solvent. The dry electrode film 45 may be prepared in a dry type (e.g., a dry form) and thus may not include an intentionally added process solvent. For example, the dry electrode film 45 may not include a residual process solvent. An unintentional trace amount of solvent may remain in the dry electrode film 45, but the solvent may not be an intentionally added process solvent. In some embodiments, the dry electrode film 45 may be distinguished from a wet electrode active material layer prepared by mixing components and a process solvent and then removing a portion or the entirety of the process solvent through drying.

According to embodiments, the calender rolls 42a and 42b may roll the first dry electrode plate 25 at a temperature of about 150 °C to about 300 °C and a pressure of about 800 kfg/cm² to about 3,500 kgf/cm²to prepare the dry electrode 50.

The dry electrode 50 according to embodiments may be additionally rolled. The rolling may be, for example, roll pressing, flat pressing, and/or the like, but is not necessarily limited thereto. A pressure during the rolling may be, for example, in a range of about 1.0 ton/cm² to about 10.0 ton/cm². If the pressure during the rolling excessively increases, the dry electrode 50 may crack. If the pressure during the rolling is excessively low, a rolling effect may be insignificant or unsuitable.

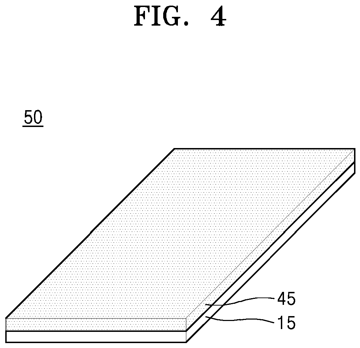

FIG. 4 is a schematic view illustrating a dry electrode 50 according to embodiments.

Referring to FIG. 4, the dry electrode 50 may include a cut electrode current collector 15 and a dry electrode film 45 on the cut electrode current collector 15. For example, the dry electrode 50 may be prepared through a method of preparing the dry electrode 50 described above.

In the dry electrode 50, for example, the dry electrode film 45 may be on at least a portion of one surface of the cut electrode current collector 15.

According to some embodiments, a system for preparing a dry electrode may include a cutting portion 10 (referring to FIG. 1) for preparing a cut electrode current collector, an applicator 20 (referring to FIG. 2) for preparing a first dry electrode plate by applying a dry mixture onto the cut electrode current collector, and a rolling portion 40 (referring to FIG. 3) for preparing a dry electrode by rolling the first dry electrode plate, wherein the applicator 20 includes a cartridge 30 which includes a drum having a surface on which protrusions are provided.

According to embodiments, in the cutting portion 10, the electrode current collector sheet 11 described above may be cut. For example, in the cutting portion 10, the electrode current collector sheet 11 may be cut to prepare a cut electrode current collector 15.

According to embodiments, in the applicator 20, the dry mixture 21 described above may be applied onto the cut electrode current collector 15 described above to prepare a first dry electrode plate 25. For example, a dry mixture 21 may be applied onto the cut electrode current collector 15 by using the above-described cartridge 30 to form an application layer 23, thereby preparing the first dry electrode plate 25.

According to embodiments, the dry mixture 21 may be prepared in the applicator 20. According to some embodiments, the dry mixture 21 may be prepared in a separate region that is separate from the applicator 20, and the dry mixture 21 may also be injected into the cartridge 30 included in the applicator 20.

According to embodiments, in the rolling portion 40, the first dry electrode plate 25 may be rolled to prepare a dry electrode 50. For example, the first dry electrode plate 25 may be inserted into the rolling portion 40 and rolled. For example, through a rolling process, a dry electrode film 45 may be prepared from the application layer 23 included in the first dry electrode plate 25. In some embodiment, the dry electrode 50 including the dry electrode film 45 and the cut electrode current collector 15 may be prepared in the rolling portion 40.

According to embodiments, the cutting portion 10, the applicator 20, the cartridge 30, and the rolling portion 40 may be integrally formed. In some embodiments, the system for preparing a dry electrode may be miniaturized.

According to some embodiments, each of the cutting portion 10, the applicator 20, the cartridge 30, and the rolling portion 40 may also be individually present.

According to embodiments, a lithium battery may include: a cathode; an anode; and an electrolyte between the cathode and the anode, wherein at least one selected from the cathode and the anode may be a dry electrode 50, and the dry electrode 50 may be prepared according to the above-described method of preparing a dry electrode.

The lithium battery may include the above-described dry electrode 50 as at least one selected from the cathode and the anode, and thus, a miniaturized lithium battery may be more easily manufactured.

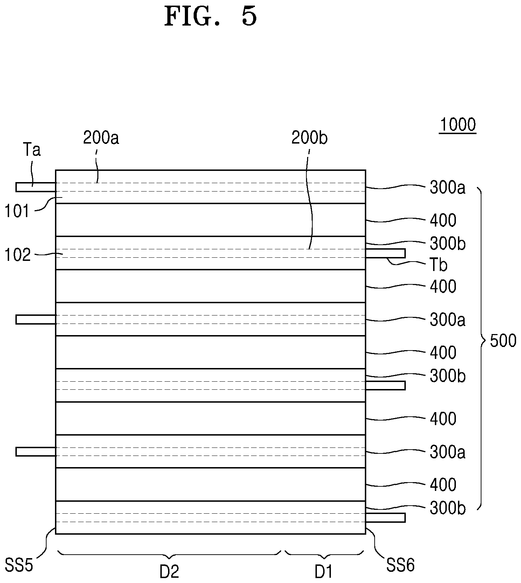

Referring to FIGS. 5-7, a lithium battery 1000 may include: a cathode 300a; an anode 300b; and an electrolyte 400 between the cathode 300a and the anode 300b, wherein at least one selected from the cathode 300a and the anode 300b is the above-described dry electrode 50. The lithium battery 1000 may include an electrode assembly 500. For example, referring to FIG. 5, the electrode assembly 500 may include: a plurality of cathodes 300a stacked in a thickness direction; a plurality of anodes 300b between the plurality of cathodes 300a; and a plurality of electrolytes 400 between the plurality of cathodes 300a and the plurality of anodes 300b. The cathode 300a may include a cathode current collector 200a, the cathode current collector 200a may include a cathode tab Ta extending to the outside of a cathode active material layer 101 through one side surface SS5 of the electrode assembly 500, the anode 300b may include an anode current collector 200b, and the anode current collector 200b may include an anode tab Tb extending to the outside of an anode active material layer 102 through the other side surface SS6 of the electrode assembly 500 opposite to the one side surface SS5 of the electrode assembly 500. The lithium battery 1000 may include the electrode assembly 500. The cathode tab Ta and the anode tab Tb may be on side surfaces opposite to each other, and thus a possibility of a short circuit between the cathode tab Ta and the anode tab Tb may be reduced.

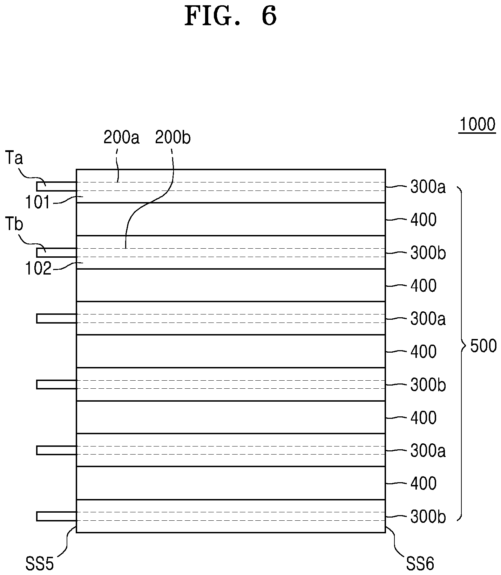

Referring to FIG. 6, the electrode assembly 500 may include: a plurality of cathodes 300a stacked in a thickness direction; a plurality of anodes 300b between the plurality of cathodes 300a; and a plurality of electrolytes 400 between the plurality of cathodes 300a and the plurality of anodes 300b. The cathode 300a may include a cathode current collector 200a, the cathode current collector 200a may include a cathode tab Ta extending to the outside of a cathode active material layer 101 through one side surface SS5 of the electrode assembly 500, the anode 300b may include an anode current collector 200b, and the anode current collector 200b may include an anode tab Tb extending to the outside of an anode active material layer 102 through the same one side surface SS5 of the electrode assembly 500. The lithium battery 1000 may include the electrode assembly 500.

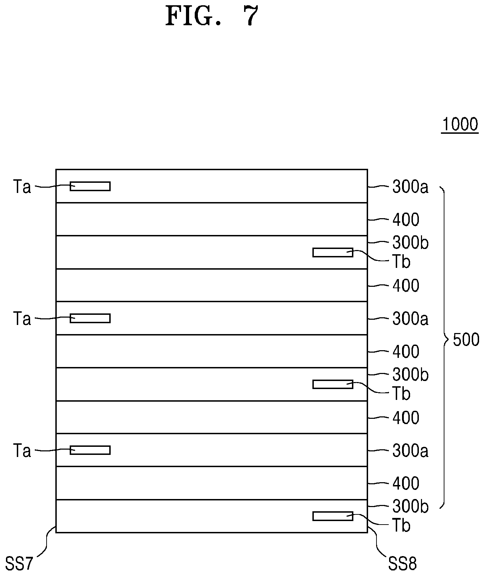

Referring to FIG. 7, on the one side surface SS5, a plurality of cathode tabs Ta may be spaced apart from each other by set or certain intervals in a thickness direction, and a plurality of anode tabs Tb may be spaced apart from each other by set or certain intervals in the thickness direction. The plurality of cathode tabs Ta may be adjacent to one side surface SS7 of the electrode assembly 500 in a width direction, and the plurality of anode tabs Tb may be adjacent to the other side surface SS8 of the electrode assembly 500 in the width direction. FIG. 7 is a front view of the one side surface SS5 of FIG. 6. The lithium battery 1000 may include the electrode assembly 500.

Although the cathode tab Ta and the anode tab Tb are on the same side surface, the cathode tab Ta and the anode tab Tb may be spaced apart from each other in the width direction, and thus a possibility of a short circuit between the cathode tab Ta and the anode tab Tb may decrease.

The lithium battery 1000 may include, for example, a lithium primary battery or a lithium secondary battery. The lithium battery 1000 may include, for example, a lithium ion battery, a lithium solid battery, and/or a lithium air battery.

The electrolyte 400 included in the lithium battery 1000 may be, for example, a liquid electrolyte or a solid electrolyte. The solid electrolyte may be, for example, an oxide-based solid electrolyte or a sulfide-based solid electrolyte.

For example, a lithium battery may be manufactured according to the following example method, but one or more embodiments are not necessarily limited thereto. Embodiments of the method may vary according to required or desired conditions.

First, both a cathode and an anode may be prepared according to the above-described method of preparing the dry electrode 50. In some embodiments, one electrode of the cathode and the anode may be prepared through the above-described method of preparing the dry electrode 50, and the other electrode may be prepared through a wet preparing method. For example, the other electrode may be prepared by preparing an electrode slurry including an electrode active material, a conductive material (e.g., an electrically conductive material), a binder, and a solvent, coating an electrode current collector with the prepared electrode slurry, and drying the electrode current collector. A conductive material and a binder included in an electrode prepared in a wet type (e.g., a wet form) may be selected from conductive materials (e.g., electrically conductive materials) and binders used in preparing the above-described dry electrode.

Next, a separator to be provided between the cathode and the anode may be prepared.

As the separator, any suitable separator may be used as long as the separator may be used in a lithium battery. For example, a separator having low resistance to the movement of ions in an electrolyte and an excellent electrolyte impregnation ability may be used. For example, the separator may include at least one selected from a glass fiber, polyester, Teflon, PE, PP, PTFE, and a combination thereof and may be in the form of a nonwoven fabric and/or a woven fabric. For example, a windable separator including PE, PP, and/or the like may be used in a lithium ion battery, and a separator having an excellent electrolyte impregnation ability may be used in a lithium ion polymer battery.

The separator may be prepared through the following example method, but one or more embodiments are not necessarily limited to such a method. Embodiments of the method may be adjusted according to required or desired conditions.

First, a polymer resin, a filler, and a solvent may be mixed together to prepare a separator composition. The separator composition may be directly applied onto an electrode and dried to form the separator. In other embodiments, the separator composition may be cast and dried on a support, and then a separator film peeled off of the support may be laminated on the electrode to form the separator.

A polymer used for preparing the separator is not limited, and any suitable material may be used as long as the material may be used in a binding material of an electrode plate. For example, the polymer may include a vinylidene fluoride/hexafluoropropylene copolymer, PVDF, PAN, polymethyl methacrylate, or a mixture thereof.

Next, an electrolyte may be prepared. For example, the electrolyte may be a liquid electrolyte, a solid electrolyte, or a gel electrolyte.

The electrolyte may be, for example, a liquid electrolyte. For example, a lithium salt may be dissolved in an organic solvent to prepare the liquid electrolyte.

As the organic solvent, any suitable material may be used as long as the material may be used as an organic solvent in the art. Examples of the organic solvent may include propylene carbonate, ethylene carbonate (EC), fluoroethylene carbonate, butylene carbonate, dimethyl carbonate (DMC), diethyl carbonate, methyl ethyl carbonate, methyl propyl carbonate, ethyl propyl carbonate, methyl isopropyl carbonate, dipropyl carbonate, dibutyl carbonate, benzonitrile, acetonitrile, tetrahydrofuran, 2-methyltetrahydrofuran, γ-butyrolactone, dioxolane, 4-methyldioxolane, N,N-dimethylformamide, dimethylacetamide, dimethyl sulfoxide, dioxane, 1,2-dimethoxyethane, sulfolane, dichloroethane, chlorobenzene, nitrobenzene, diethylene glycol, dimethyl ether, or a mixture thereof.

As the lithium salt, any suitable material may be used as long as the material may be used as a lithium salt in the art. Examples of the lithium salt may include LiPF₆, LiBF₄, LiSbF₆, LiAsF₆, LiClO₄, LiCF₃SO₃, Li(CF₃SO₂)₂N, LiC₄F₉SO₃, LiAlO₂, LiAlCl₄, LiN(CₓF₂ₓ₊₁SO₂)(C_{y}F_{2y+1}SO₂), wherein x and y are each a natural number, LiCl, Lil, or a mixture thereof.

The solid electrolyte may be, for example, an oxide-based solid electrolyte, a sulfide-based solid electrolyte, a polymer-based solid electrolyte, or a combination thereof.

The solid electrolyte may be, for example, an oxide-based solid electrolyte. The oxide-based solid electrolyte may include at least one selected from Li_{1+x+y}AlₓTi₂₋ₓSi_{y}P_{3-y}O₁₂, wherein 0<x<2 and 0≤y<3, BaTiO₃, Pb(Zr,Ti)O₃(PZT), Pb₁₋ₓLaₓZr_{1-y}Ti_{y}O₃ (PLZT), wherein 0≤x<1 and 0≤y<1, Pb(Mg₃Nb_{2/3})O₃-PbTiO₃ (PMN-PT), HfO₂, SrTiO₃, SnO₂, CeO₂, Na₂O, MgO, NiO, CaO, BaO, ZnO, ZrO₂, Y₂O₃, Al₂O₃, TiO₂, SiO₂, Li₃PO₄, LiₓTi_{y}(PO₄)₃, wherein 0<x<2 and 0<y<3, LiₓAl_{y}Ti_{z}(PO₄)₃, wherein 0<x<2, 0<y<1, and 0<z<3, Li_{1+x+y}(Al, Ga)ₓ(Ti, Ge)₂₋ₓSi_{y}P_{3-y}O₁₂, wherein 0≤x≤1 and 0≤y≤1, LiₓLa_{y}TiO₃, wherein 0<x<2 and 0<y<3, Li₂O, LiOH, Li₂CO₃, LiAlO₂, Li₂O-Al₂O₃-SiO₂-P₂O₅-TiO₂-GeO₂, and Li₃₊ₓLa₃M₂O₁₂, wherein M=Te, Nb, or Zr, and x is an integer from 1 to 10. The solid electrolyte may be prepared through sintering and/or the like. For example, the oxide-based solid electrolyte may be a garnet-type solid electrode selected from Li₇La₃Zr₂O₁₂ (LLZO) and Li₃₊ₓLa₃Zr₂₋ₐMₐO₁₂ (LLZO doped with M), wherein M=Ga, W, Nb, Ta, or Al, and x is an integer from 1 to 10, 0<a<2.

The sulfide-based solid electrolyte may include, for example, lithium sulfide, silicon sulfide, phosphorus sulfide, boron sulfide, or a combination thereof. Sulfide-based solid electrolyte particles may include Li₂S, P₂S₅, SiS₂, GeS₂, B₂S₃, or a combination thereof. The sulfide-based solid electrolyte particles may include Li₂S and/or P₂S₅. The sulfide-based solid electrolyte particles have higher lithium ion conductivity than other inorganic compounds. For example, the sulfide-based solid electrolyte may include Li₂S and P₂S₅. If a sulfide solid electrolyte material constituting the sulfide-based solid electrolyte includes Li₂S-P₂S₅, a mixing molar ratio of Li₂S to P₂S₅ may be, for example, in a range of about 50:50 to about 90:10. In some embodiments, an inorganic solid electrolyte, which is prepared by adding Li₃PO₄, a halogen, a halogen compound, Li₂₊₂ₓZn₁₋ₓGeO₄ ("LISICON"), wherein 0≤x<1, Li_{3+y}PO₄₋ₓNₓ (LIPON), wherein 0<x<4 and 0<y<3, Li_{3.25}Ge_{0.25}P_{0.75}S₄ ("Thio LISICON"), Li₂O-Al₂O₃-TiO₂-P₂O₅ "(LATP"), and/or the like to Li₂S-P₂S₅, SiS₂, GeS₂, B₂S₃, or a combination thereof, may be used as the sulfide-based solid electrolyte. Non-limiting examples of the sulfide solid electrolyte material may include Li₂S-P₂S₅; Li₂S-P₂S₅-LiX, wherein X is a halogen element; Li₂S-P₂S₅-Li₂O; Li₂S-P₂S₅-Li₂O-LiI; Li₂S-SiS₂; Li₂S-SiS₂-Lil; Li₂S-SiS₂-LiBr; Li₂S-SiS₂-LiCl; Li₂S-SiS₂-B₂S₃-LiI; Li₂S-SiS₂-P₂S₅-LiI; Li₂S-B₂S₃; Li₂S-P₂S₅-ZₘSₙ, wherein 0<m<10, 0<n<10, and Z=Ge, Zn, and/or Ga; Li₂S-GeS₂; Li₂S-SiS₂-Li₃PO₄; and Li₂S-SiS₂-LiₚMO_{q}, wherein 0<p<10, 0<q<10, and M=P, Si, Ge, B, Al, Ga, and/or In. In this regard, a sulfide-based solid electrolyte material may be prepared by treating a raw starting material (for example, Li₂S and/or P₂S₅) of the sulfide-based solid electrolyte material through melt quenching, mechanical milling, and/or the like. In some embodiments, a calcination process may be performed after the treating. The sulfide-based solid electrolyte may be in an amorphous state, a crystalline state, or a mixture state thereof.

The polymer solid electrolyte may be, for example, an electrolyte including a mixture of a lithium salt and a polymer or may include a polymer having an ion-conductive functional group. The polymer solid electrolyte may be, for example, a polymer electrolyte that does not include a liquid electrolyte. The polymer included in the polymer solid electrolyte may include, for example, PEO, PVDF, PVDF-HFP, PEO, a poly(styrene-b-ethylene oxide) (PS-PEO) block copolymer, poly(styrene-butadiene), poly(styrene-isoprene-styrene), a poly(styrene-b-divinylbenzene) block copolymer, a poly(styrene-ethylene oxide-styrene) block copolymer, polystyrene sulfonate (PSS), PVF, PMMA, PEG, PAN, polytetrafluoroelene (PTFE), PEDOT, PPY, PAN, polyaniline, poly acetylene, NAFION^{™} AQUIVION^{®}, FLEMION^{®}, GORE^{™}, ACIPLEX^{™}, MORGANE^{®}-ADP, SPEEK, SPAEKKS, SPAEK, SPBIBI, PSS, DPASLi⁺, or a combination thereof, but one or more embodiments are not limited thereto. Any suitable material may be used as long as the material may be used in a polymer electrolyte in the art. As the lithium salt, any suitable material may be used as long as the material may be used as a lithium salt in the art. The lithium salt may include, for example, LiPF₆, LiBF₄, LiSbF₆, LiAsF₆, LiClO₄, LiCF₃SO₃, Li(CF₃SO₂)₂N, LiC₄F₉SO₃, LiAlO₂, LiAlCl₄, LiN(CₓF₂ₓ₊₁SO₂)(C_{y}F_{2y+1}SO₂), wherein x and y are each a natural number from 1 to 20, LiCl, Lil, or a mixture thereof.

The gel electrolyte may be, for example, a gel polymer electrolyte. The gel polymer electrolyte may be, for example, an electrolyte including a liquid electrolyte and a polymer or including an organic solvent and a polymer having an ion-conductive functional group. The liquid electrolyte may include, for example, an ionic liquid, a mixture of a lithium salt and an organic solvent, a mixture of an ionic liquid and an organic solvent, or a mixture of a lithium salt and an ionic liquid and an organic solvent. The polymer may be selected from polymers used in a solid polymer electrolyte. The organic solvent may be selected from organic solvents used in a liquid electrolyte. The lithium salt may be selected from lithium salts used in a solid polymer electrolyte. The ionic liquid may refer to a salt in a liquid state at room temperature or a roomtemperature molten salt that has a melting point at room temperature or less and consists of only ions. The ionic liquid may include, for example, a compound including a) one cation selected from an ammonium-based cation, a pyrrolidinium-based cation, pyridinium-based cation, a pyrimidinium-based cation, an imidazolium-based cation, a piperidinium-based cation, a pyrazolium-based cation, an oxazolium-based cation, a pyridazinium-based cation, a phosphonium-based cation, a sulfonium-based cation, a triazolium-based cation, and a mixture thereof, and b) at least one anion selected from BF₄⁻, PF₆⁻, AsF₆⁻, SbF₆⁻, AlCl₄⁻, HSO4⁻, ClO4⁻, CH₃SO₃⁻, CF₃CO₂⁻, Cl⁻, Br⁻, I⁻, BF₄⁻, SO₄²⁻, CF₃SO₃⁻, (FSO₂)₂N-, (C₂F₅SO₂)₂N-, (C₂F₅SO₂)(CF₃SO₂)N-, and (CF₃SO₂)₂N-. The polymer solid electrolyte may be impregnated in the electrolyte solution in the lithium battery to form the gel polymer electrolyte. The gel electrolyte may further include inorganic particles.

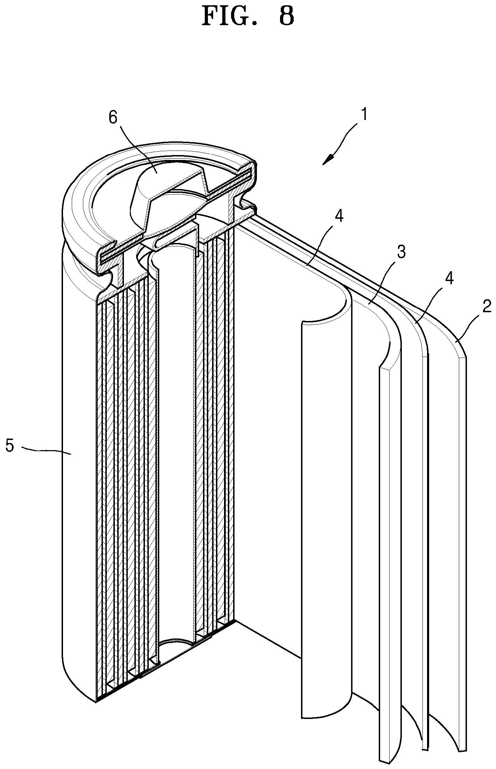

Referring to FIG. 8, a lithium battery 1 according to embodiments may include a cathode 3, an anode 2, and a separator 4. The cathode 3, the anode 2, and the separator 4 may be wound or folded to form a battery structure. The formed battery structure may be accommodated in a battery case 5. An organic electrolyte may be injected into the battery case 5, and the battery case 5 may be sealed with a cap assembly 6 to complete the lithium battery 1. The battery case 5 may have a cylindrical shape, but one or more embodiments are not necessarily limited to such a shape. For example, the battery case 5 may have a prismatic shape, a thin film shape, or the like.

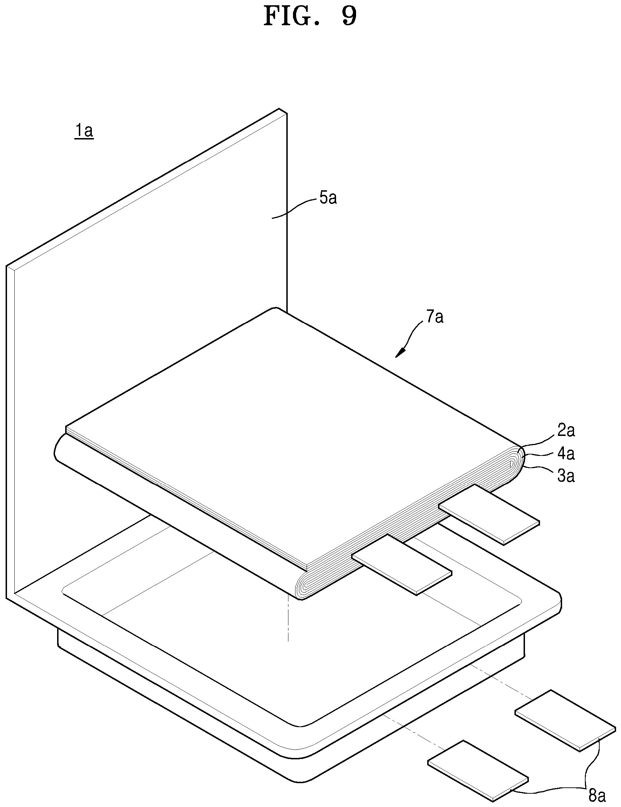

Referring to FIG. 9, a lithium battery 1a according to embodiments may include a cathode 3a, an anode 2a, and a separator 4a. The separator 4a may be between the cathode 3a and the anode 2a, and the cathode 3a, the anode 2a, and the separator 4a may be wound or folded to form a battery structure 7a. The formed battery structure 7a may be accommodated in a battery case 5a. The lithium battery 1a may include an electrode tab 8a serving as an electrical path for guiding a current generated in the battery structure 7a to the outside. An organic electrolyte may be injected into the battery case 5a, and the battery case 5a may be sealed to complete the lithium battery 1a. The battery case 5a may have a prismatic shape, but one or more embodiments are not necessarily limited to such a shape. For example, the battery case 5a may have a cylindrical shape, a thin film shape, or the like.

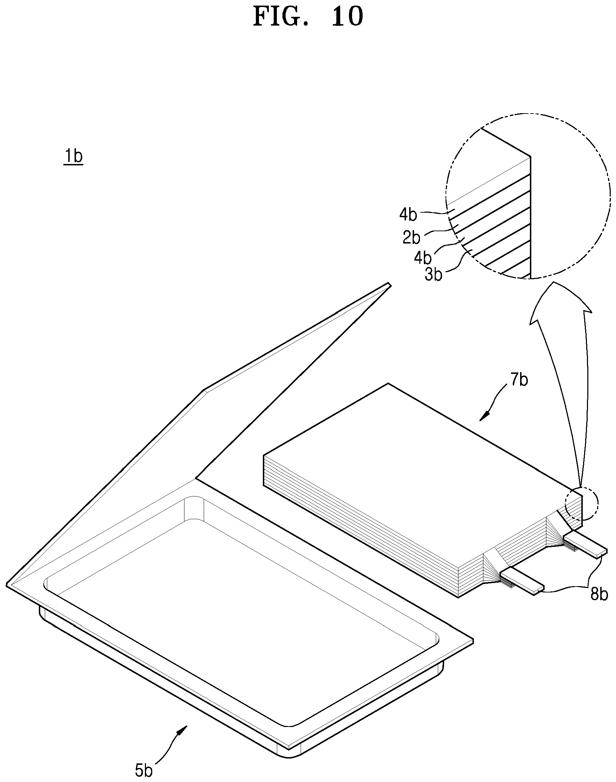

Referring to FIG. 10, a lithium battery 1b according to embodiments may include a cathode 3b, an anode 2b, and a separator 4b. The separator 4b may be between the cathode 3b and the anode 2b to form a battery structure 7b. The battery structure 7b may be stacked in a bi-cell structure and then accommodated in a battery case 5b. The lithium battery 1b may include an electrode tab 8b serving as an electrical path for guiding a current generated in the battery structure 7b to the outside. An organic electrolyte may be injected into the battery case 5b, and the battery case 5b may be sealed to complete the lithium battery 1b. The battery case 5b may have a prismatic shape, but one or more embodiments are not necessarily limited to such a shape. For example, the battery case 5b may have a cylindrical shape, a thin film shape, or the like.

A pouch-type lithium battery may correspond to an embodiment in which a pouch is used as a battery case in the lithium batteries of FIGS. 8-10. The pouch-type lithium battery may include one or more battery structures. A separator may be between a cathode and an anode to form the battery structure. After the battery structure is stacked in a bi-cell structure, the battery structure may be impregnated in an organic electrolyte, accommodated in a pouch, and sealed to complete the pouch-type lithium battery. For example, in some embodiments, the above-described cathode, anode, and separator may be simply stacked and accommodated in a pouch in the form of an electrode assembly or may be wound or folded into a jelly roll-shaped electrode assembly and then accommodated in a pouch. Subsequently, an organic electrolyte may be injected into the pouch, and the pouch may be sealed to complete a lithium battery.

A lithium battery may have excellent lifespan characteristics and high-rate characteristics and thus may be used, for example, in electric vehicles (EVs). For example, the lithium battery may be used in hybrid vehicles such as plug-in hybrid electric vehicles (PHEVs). In some embodiments, the lithium battery may be used in fields in which large amounts of power are stored. For example, the lithium battery may be used in electric bicycles, power tools, and/or the like.

A plurality of lithium batteries may be stacked to form a battery module, and a plurality of battery modules may form a battery pack. The battery pack may be used in devices that utilize high capacity and high output power. For example, the battery pack may be used in laptops, smartphones, electric vehicles, and/or the like. A battery module may include, for example, a plurality of batteries and a frame for holding the plurality of batteries. A battery pack may include, for example, a plurality of battery modules and a busbar for connecting the plurality of battery modules. The battery module and/or the battery pack may further include a cooling device. A plurality of battery packs may be controlled by a battery management system. The battery management system may include a battery pack and a battery controller connected to the battery pack.

Hereinafter, embodiments of the present disclosure will be described in more detail with reference to the following Examples and Comparative Examples. However, the following Examples are merely presented to provide example embodiments of the present disclosure, and the scope of the present disclosure is not limited thereto.

### Manufacturing of lithium battery (half-cell)

### Example 1: Particle diameter of applied dry mixture=100 µm

### Preparation of cathode

A cathode current collector sheet, in which a carbon layer as a coating layer was on one surface of an aluminium thin film having a thickness of 12 µm, was prepared. The coating layer may be regarded as an interlayer.

A composition including a carbon conductive material (Denka black) and PVDF was applied onto the aluminium thin film and then dried to prepare a carbon layer. A thickness of the carbon layer on the one surface of the aluminium thin film was about 1 µm.

The cathode current collector sheet was cut to have a length of 29.7 cm and a width of 21 cm, thereby preparing a cut cathode current collector.

LiNi_{0.91}Co_{0.05}Al_{0.04}O₂ (hereinafter referred to as NCA91) as a dry cathode active material, a carbon conductive material (Denka black) as a dry conductive material, and PVDF as a dry binder were put into a blade mixer in a weight ratio of 93:4:3 and then primarily dry-mixed at a speed of 900 rpm at a temperature of 25 °C for 10 minutes to prepare a first mixture in which a dry cathode active material, a dry conductive material, and a dry binder were uniformly mixed. Subsequently, in order for the dry binder to be fibrillized, the first mixture was additionally secondarily mixed at a speed of 4,800 rpm at a temperature of 25 °C for 20 minutes to prepare a dry mixture. A separate solvent was not used during preparation of the first mixture and the dry mixture.

The dry mixture was injected into a cartridge including a drum on which protrusions were provided, wherein the protrusions each had a height of 0.5 mm, and a width between the protrusions was 0.02 mm. By using the cartridge, only the dry mixture having an average particle diameter D50 of 0.1 mm was applied onto the cut cathode current collector to prepare a first dry electrode plate.

The first dry electrode plate was placed between a pair of calender rolls and calendered to prepare a dry cathode. A dry cathode film included in the dry cathode included a dry binder fibrillized in an MD.

### Manufacturing of lithium battery

By using the dry cathode prepared above, a lithium metal was used as a counter electrode, and a solution, in which a PTFE separator and 1.3 M LiPF₆ were dissolved in EC+ethyl methyl carbonate (EMC)+DMC (volume ratio of 3:4:3), was used as an electrolyte to manufacture a coin cell.

### Example 2: Particle diameter of applied dry mixture=220 µm

A cathode film, a cathode, and a lithium battery were manufactured in substantially the same manner as in Example 1, except that, by using a cartridge including a drum on which protrusions were provided, wherein the protrusions each had a height of 0.8 mm and a width between the protrusions was 0.02 mm, only a dry mixture having an average particle diameter D50 of 0.22 mm was applied onto the cut cathode current collector.

### Example 3: Particle diameter of applied dry mixture=450 µm

A cathode film, a cathode, and a lithium battery were manufactured in the substantially same manner as in Example 1, except that, by using a cartridge including a drum on which protrusions were provided, wherein the protrusions each had a height of 1.0 mm and a width between the protrusions was 0.05 mm, only a dry mixture having an average particle diameter D50 of 0.45 mm was applied onto the cut cathode current collector.

### Example 4: Length of cathode current collector length=42 cm, width of cathode current collector=29.7 cm

A cathode film, a cathode, and a lithium battery were manufactured in the substantially same manner as Example 1, except that the cathode electrode current collector sheet was cut to have a length of 42 cm and a width of 29.7 cm.

### Example 5: Length of cathode current collector length=21 cm, width of cathode current collector=14.8 cm

A cathode film, a cathode, and a lithium battery were manufactured in substantially the same manner as Example 1, except that the cathode electrode current collector sheet was cut to have a length of 21 cm and a width of 14.8 cm.

**Table 1**

| | Protrusions formed on drum surface | | Average particle diameter of applied dry mixture (µm) | Cut cathode current collector | |
|---|---|---|---|---|---|
| | Height h | Width w | | Length L (cm) | Width W (cm) |
| Example 1 | 0.5 mm | 0.02 mm | 100 | 29.7 | 21 |
| Example 2 | 0.8 mm | 0.02 mm | 220 | 29.7 | 21 |
| Example 3 | 1.0 mm | 0.05 mm | 450 | 29.7 | 21 |
| Example 4 | 0.5 mm | 0.02 mm | 100 | 42 | 29.7 |
| Example 5 | 0.5 mm | 0.02 mm | 100 | 21 | 14.8 |

### Comparative Example 1: Instance of not cutting cathode current collector sheet in advance and cutting prepared dry cathode with cathode film

A cathode film, a cathode, and a lithium battery were manufactured in substantially the same manner as in Example 1, except that a dry cathode was prepared by using substantially the same cartridge as in Example 1 without cutting a cathode current collector sheet in advance, and the prepared dry cathode was cut (i.e. cutting with the cathode film on the cathode current collector sheet) to have a length of 100 cm and a width of 21 cm.

### Comparative Example 2: Instance of not using cartridge

A cathode film, a cathode, and a lithium battery were manufactured in substantially the same manner as in Example 1, except that a dry mixture having a broad average particle diameter D50 of 100 µm was applied onto a cut cathode current collector without using a cartridge.

### Comparative Example 3: Wet cathode

### Preparation of cathode

A mixture obtained by mixing LiNi_{0.91}Co_{0.05}Al_{0.04}O₂ as a cathode active material, a carbon conductive material (Denka black), and PVDF at a weight ratio of 92:4:4 was mixed with NMP in an agate mortar to prepare a slurry.

The slurry was applied on the entirety of one surface of an aluminium current collector having a thickness of 12 µm through bar coating, dried at room temperature, and then dried once again under conditions of vacuum and a temperature of 120 °C to provide a cathode active material layer, thereby preparing a stack. Next, the prepared stack was rolled to prepare a cathode.

### Manufacturing of coin cell

A coin cell was manufactured in substantially the same manner as in Example 1, except that the cathode prepared above was used.

### Evaluation Example 1: Evaluation of charge/discharge efficiency and lifespan characteristics

The lithium batteries manufactured in Examples 1 to 5 and Comparative Examples 1 to 3 were charged at a constant current rate of 0.1 C at a temperature of 25 °C until a voltage reached 4.4 V (vs. Li), and then, in a constant voltage mode, while 4.4 V was maintained, the charging was cut off at a current rate of 0.05 C to measure charge capacity. Subsequently, during discharging, the lithium batteries were discharged at a constant current rate of 0.1 C until the voltage reached 2.8 V (vs. Li) to measure discharge capacity (formation cycle). A ratio of discharge capacity to charge capacity may be expressed as efficiency. Results thereof are shown in Table 1 below.

The lithium batteries subjected to the formation cycle were charged at a constant current rate of 0.5 C at a temperature of 25 °C until the voltage reached 4.4 V (vs. Li). Subsequently, the lithium batteries were discharged at a constant current rate of 0.5 C until the voltage reached 2.8 V (vs. Li) during discharging. Such a cycle was repeated up to a 100^{th} cycle (100 times).

The lithium batteries were rested for 10 minutes after every charging/discharging cycle. A capacity retention ratio at the 100^{th} cycle is defined by Equation 1 below, and measurement results are shown in Table 1 below. capacity retention ratio (%) = [discharge capacity at 100th cycle/discharge capacity at 1st cycle] × 100

**Table 2**

| | Electrode type | Charge capacity (mAh/g) | Discharge capacity (mAh/g) | Efficiency (%) | Capacity retention ratio |
|---|---|---|---|---|---|
| | | | | | (%) |
| Example 1 | Dry type | 243.5 | 214.4 | 88.1 | 94.2 |
| Example 2 | Dry type | 244.2 | 215.3 | 88.2 | 94.1 |
| Example 3 | Dry type | 244.3 | 215.3 | 88.1 | 94.2 |
| Example 4 | Dry type | 243.8 | 215.3 | 88.3 | 94.3 |
| Example 5 | Dry type | 243.3 | 214.5 | 88.1 | 94.1 |
| Comparative Example 1 | Dry type | 236.3 | 209.2 | 88.5 | 92.8 |
| Comparative Example 2 | Dry type | 237.4 | 209.6 | 88.3 | 92.6 |
| Comparative Example 3 | Wet type | 240.2 | 212.8 | 88.6 | 93.8 |

As a result of a charge/discharge test, as compared with Comparative Examples 1 to 3, the lithium batteries of Examples 1 to 5 maintained excellent efficiency and had improved charge and discharge capacities and an improved capacity retention ratio.

In some embodiments, as compared with Comparative Examples 1 and 2, the damage and cracks of a dry electrode, which could occur during a process of manufacturing a miniaturized lithium battery, could be prevented or reduced, thereby improving the charge/discharge capacity and lifespan characteristics of the lithium batteries of Examples 1 to 5.

According to an aspect of embodiments, by including a plurality of electrode active material layers stretched in different directions, the structural stability of a dry electrode film may be improved.

In some embodiments, by including a dry electrode film having improved structural stability, the deterioration of a dry electrode during charging/discharging may be suppressed or reduced.

In some embodiments, by including a dry electrode film having improved structural stability, the cycle characteristics of a lithium battery may be improved.

It should be understood that embodiments described herein should be considered in a descriptive sense only and not for purposes of limitation. Descriptions of features or aspects within each embodiment should typically be considered as available for other similar features or aspects in other embodiments. While one or more embodiments have been described with reference to the figures, it will be understood by those of ordinary skill in the art that various changes in form and details may be made therein without departing from the scope of the present disclosure as defined by the following claims, and equivalents thereof.

Embodiments are set out in the following clauses:
Clause 1. A method of preparing a dry electrode, the method comprising:
   preparing a cut electrode current collector;
   applying a dry mixture onto at least a portion of the cut electrode current collector to prepare a first dry electrode plate; and
   rolling the first dry electrode plate to prepare a dry electrode,
   wherein the applying of the dry mixture is performed by using a cartridge which comprises a drum having a surface on which a plurality of protrusions are formed.
Clause 2. The method of clause 1, wherein a width W of the cut electrode current collector is in a range of about 100 mm to about 500 mm, and
   a length L of the cut electrode current collector is in a range of about 200 mm to about 600 mm.
Clause 3. The method of clause 1 or clause 2, wherein the cut electrode current collector has a form selected from a sheet, foil, a film, a plate, a porous body, a mesoporous body, a through-hole-containing body, a polygonal ring body, a mesh body, a foam body, a woven body, and a nonwoven body.
Clause 4. The method of any one of clauses 1 to 3, wherein the cut electrode current collector comprises a base film and a metal layer disposed on one surface or two surfaces of the base film,
   wherein the base film comprises a polymer, the polymer comprising polyethylene terephthalate (PET), polyethylene (PE), polypropylene (PP), polybutylene terephthalate (PBT), polyimide (PI), or a combination thereof, and
   the metal layer comprises indium (In), copper (Cu), magnesium (Mg), titanium (Ti), iron (Fe), cobalt (Co), nickel (Ni), zinc (Zn), aluminum (Al), germanium (Ge), lithium (Li), or an alloy thereof.
Clause 5. The method of any one of clauses 1 to 4, wherein the preparing of the cut electrode current collector comprises preparing an electrode current collector sheet; forming an interlayer on the electrode current collector sheet; and cutting the electrode current collector sheet on which the interlayer is formed.
Clause 6. The method of clause 5, wherein the interlayer comprises a binder.
Clause 7. The method of clause 5 or clause 6, wherein the interlayer comprises a carbon-based conductive material.
Clause 8. The method of any one of clauses 1 to 7, wherein the preparing of the first dry electrode plate comprises: preparing the dry mixture; and applying the dry mixture onto the at least a portion of the cut electrode current collector by using the cartridge.
Clause 9. The method of clause 8, wherein the preparing of the dry mixture comprises mixing a dry electrode active material and a dry binder to prepare the dry mixture.
Clause 10. The method of clause 9, wherein the dry binder comprises a fluorine-based binder, a glass transition temperature (T_{g}) of the dry binder is in a range of about 15 °C to about 100 °C, and a content of the dry binder is in a range of about 0.1 wt% to about 5 wt% with respect to a total weight of the dry mixture.
Clause 11. The method of clause 9 or clause 10, wherein the dry mixture further comprises a dry conductive material,
   the dry conductive material comprises a carbon-based conductive material,
   the carbon-based conductive material comprises a fibrous carbon-based material having an aspect ratio of 10 or more, a particulate carbon-based material having an aspect ratio of 5 or less, or a combination thereof, and
   a content of the dry conductive material is in a range of about 0.1 wt% to about 5 wt% with respect to a total weight of the dry mixture.
Clause 12. The method of any one of clauses 1 to 11, wherein a height h of each of the protrusions formed on the surface of the drum is in a range of about 0.1 mm to about 20 mm, and
   a width w between the adjacent protrusions is in a range of about 0.01 mm to about 0.1 mm.
Clause 13. The method of any one of clauses 1 to 12, wherein the preparing of the first dry electrode plate comprises applying the dry mixture having an average particle diameter of about 0.05 mm to about 1.0 mm onto the cut electrode current collector by using the cartridge.
Clause 14. The method of any one of clauses 1 to 13, wherein the preparing of the dry electrode comprises: inserting the first dry electrode plate between calender rolls; and rolling the first dry electrode plate by using the calender rolls to prepare the dry electrode.
Clause 15. The method of clause 14, wherein the calender rolls roll the first dry electrode plate at a temperature of about 150 °C to about 300 °C and a pressure of about 800 kgf/cm² to about 3,500 kgf/cm².
Clause 16. The method of clause 14 or clause 15, wherein the preparing of the dry electrode comprises rolling the first dry electrode plate by using the calender rolls to form a fibrillized dry electrode film on the cut electrode current collector in a machine direction (MD).
Clause 17. A dry electrode prepared through the method of preparing the dry electrode of any one of clauses 1 to 16.
Clause 18. A system for preparing a dry electrode, the system comprising:
   a cutting portion for preparing a cut electrode current collector;
   an applicator for preparing a first dry electrode plate by applying a dry mixture onto the cut electrode current collector; and
   a rolling portion for preparing a dry electrode by rolling the first dry electrode plate,
   wherein the applicator comprises a cartridge which comprises a drum having a surface on which protrusions are formed.
Clause 19. A lithium battery comprising:
   a cathode;
   an anode; and
   an electrolyte disposed between the cathode and the anode,
   wherein at least one of the cathode and the anode is the dry electrode of clause 17.
Clause 20. The lithium battery of clause 19, wherein the electrolyte comprises a liquid electrolyte, a solid electrolyte, or a gel electrolyte.

## Claims

1. A method of preparing a dry electrode, the method comprising:
preparing a cut electrode current collector;
applying a dry mixture onto at least a portion of the cut electrode current collector to prepare a first dry electrode plate; and
rolling the first dry electrode plate to prepare a dry electrode,
wherein the applying of the dry mixture is performed by using a cartridge comprising a drum having a surface on which a plurality of protrusions are provided.

2. The method as claimed in claim 1, wherein a width W of the cut electrode current collector is in a range of about 100 mm to about 500 mm, and
a length L of the cut electrode current collector is in a range of about 200 mm to about 600 mm.

3. The method as claimed in claim 1 or claim 2, wherein the cut electrode current collector has a form selected from a sheet, foil, a film, a plate, a porous body, a mesoporous body, a through-hole-containing body, a polygonal ring body, a mesh body, a foam body, a woven body, and a nonwoven body.

4. The method as claimed in any one of claims 1 to 3, wherein the cut electrode current collector comprises a base film and a metal layer on one surface or two surfaces of the base film,
wherein the base film comprises a polymer, the polymer comprising polyethylene terephthalate (PET), polyethylene (PE), polypropylene (PP), polybutylene terephthalate (PBT), polyimide (PI), or a combination thereof, and
the metal layer comprises indium (In), copper (Cu), magnesium (Mg), titanium (Ti), iron (Fe), cobalt (Co), nickel (Ni), zinc (Zn), aluminium (Al), germanium (Ge), lithium (Li), and/or an alloy thereof.

5. The method as claimed in any one of claims 1 to 4, wherein the preparing of the cut electrode current collector comprises preparing an electrode current collector sheet; providing an interlayer on the electrode current collector sheet; and cutting the electrode current collector sheet on which the interlayer is formed.

6. The method as claimed in claim 5, wherein the interlayer comprises a binder; and/or wherein the interlayer comprises a carbon-based conductive material.

7. The method as claimed in any one of claims 1 to 6, wherein the preparing of the first dry electrode plate comprises: preparing the dry mixture; and applying the dry mixture onto at least the portion of the cut electrode current collector by using the cartridge;
optionally wherein the preparing of the dry mixture comprises mixing together a dry electrode active material and a dry binder to prepare the dry mixture.

8. The method as claimed in claim 7, wherein the dry binder comprises a fluorine-based binder, a glass transition temperature (T_{g}) of the dry binder is in a range of about 15 °C to about 100 °C, and a content of the dry binder is in a range of about 0.1 wt% to about 5 wt% with respect to a total weight of the dry mixture; and/or
wherein the dry mixture further comprises a dry conductive material,
the dry conductive material comprises a carbon-based conductive material,
the carbon-based conductive material comprises a fibrous carbon-based material having an aspect ratio of 10 or more, a particulate carbon-based material having an aspect ratio of 5 or less, or a combination thereof, and
a content of the dry conductive material is in a range of about 0.1 wt% to about 5 wt% with respect to a total weight of the dry mixture.

9. The method as claimed in any one of claims 1 to 8, wherein a height h of each of the protrusions on the surface of the drum is in a range of about 0.1 mm to about 20 mm, and
a width w between the adjacent protrusions is in a range of about 0.01 mm to about 0.1 mm.

10. The method as claimed in any one of claims 1 to 9, wherein the preparing of the first dry electrode plate comprises applying the dry mixture having an average particle diameter of about 0.05 mm to about 1.0 mm onto the cut electrode current collector by using the cartridge.

11. The method as claimed in any one of claims 1 to 10, wherein the preparing of the dry electrode comprises: inserting the first dry electrode plate between calender rolls; and rolling the first dry electrode plate by using the calender rolls to prepare the dry electrode;
optionally wherein the calender rolls roll the first dry electrode plate at a temperature of about 150 °C to about 300 °C and a pressure of about 800 kgf/cm² to about 3,500 kgf/cm²; and/or
optionally wherein the preparing of the dry electrode comprises rolling the first dry electrode plate by using the calender rolls to form a fibrillized dry electrode film on the cut electrode current collector in a machine direction (MD).

12. A dry electrode prepared according to the method of preparing the dry electrode as claimed in any one of claims 1 to 11.

13. A system for preparing a dry electrode, the system comprising:
a cutting portion for preparing a cut electrode current collector;
an applicator for preparing a first dry electrode plate by applying a dry mixture onto the cut electrode current collector; and
a rolling portion for preparing a dry electrode by rolling the first dry electrode plate,
wherein the applicator comprises a cartridge comprising a drum having a surface on which protrusions are provided.

14. A lithium battery comprising:
a cathode;
an anode; and
an electrolyte between the cathode and the anode,
wherein at least one selected from the cathode and the anode is the dry electrode as claimed in claim 12.

15. The lithium battery as claimed in claim 14, wherein the electrolyte comprises a liquid electrolyte, a solid electrolyte, or a gel electrolyte.
